# EUROPEAN PATENT APPLICATION

(11) **EP 1 492 298 A2**
(43) Date of publication of application: **29.12.2004**
(21) Application number: 04004676.5
(22) Date of filing: 01.03.2004
(51) Int. Cl.: H04L 29/06

(54) **Server and control method for managing permission setting of personal information disclosure**

(30) Priority: 23.06.2003 JP 2003177456
(71) Applicant: Hitachi, Ltd., Chiyoda-ku, Tokyo 101-8010 (JP)
(72) Inventor: Miyata, Tatsuhiko, Hitachi, Ltd., Int. Prop. Group, Chiyoda-ku, Tokyo 100-8220 (JP); Kawai, Eri, Hitachi, Ltd., Int. Prop. Group, Chiyoda-ku, Tokyo 100-8220 (JP)
(74) Representative: Beetz & Partner Patentanwälte

(57) **Abstract**

The invention relates to a server (1) having the function of categorizing permission setting values indicating whether object information items of various attribute of a registered user are disclosable to other persons or not depending on a level of the disclosability, and managing the permission setting values hierarchically.

## Description

### BACKGROUND OF THE INVENTION

### (1) Field of the Invention

The present invention relates to a method for setting information disclosure.

### (2) Description of Related Art

With advances in communication technology and network technology, the onset of a ubiquitous network society which allows for communication at any time and any place is approaching. It has been said that communication in the ubiquitous society allows each user of a system to register personal information of his own or of the other users and receive a variety of services.

A permission system used in the Unix system is among currently prevailing methods for managing privacy protection in a database. The permission system sets, for each of the three operations of Read, Write, and Execute, a permission of access to a directory or file in a file system having a directory structure byusing the three distinct access units of Owner, Group, or Other. Permission setting is carried out normally by the administrator of a whole system in consideration of the security of the whole system.

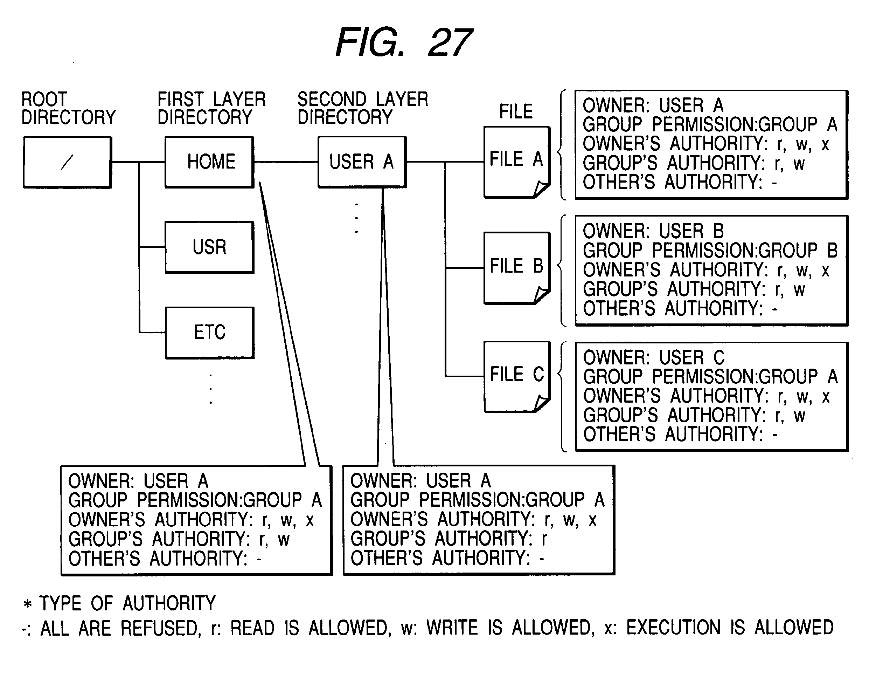

FIG. 27 shows a structural view of a file system used in the Unix system with parameters used for permission settings. With reference to the drawing, a permission management method implemented on the Unix will be described.

A description will be given first to preconditions for FIG. 27. The file system of FIG. 27 has a tree structure in which a plurality of first layer directories and a plurality of second layer directories are formed under a root directory and three files A, B, and C are stored in layers underlying each of the second layer directories. It is assumed that three users User A, User B, and User C are present in this file system. It is also assumed that Group A is formed of User A and User C and Group B is formed of User A and User B.

Each of rectangles outside the file system shows values for setting the presence or absence of access authority and types thereof (hereinafter referred to as a permission) to each of directories and files. For example, the rectangle on the right side of file A shows permission setting values for file A. According to the permission settings for file A, the owner of file A is User A and the group to which group permissions have been given is Group A, while the types of the access authority given to the owner are "r", "w" and "x", which indicate that any of the Read, Write, and Execute operations is executable. On the other hand, the types of the authority given to the group are "r" and "w", which indicate that the operations permitted to a user belonging to Group A are Read and Write operations. The authority given to other persons is "-", which indicates that other persons cannot operate file A at all.

It is assumed that this file system is provided with an additional management server for performing permission management, though it is not shown. Each of the permission setting values is stored in storage means in the management server and the management server judges permissions by referencing to the storage means upon each occurrence of access to any of the directories and files.

A description will be given to a method for judging permissions when User A, User B, and User C access file A, file B, and file C, respectively. When User A accesses file A, the access is started in the order of the root directory, the first layer directories, the second layer directories, and the file. In an actual situation, the access is made in the order of home, User A, and file A.

The access management server of the file system first checks the respective owners of home, each of the directories of User A, and file A to be accessed by User A. Each of the owners is User A and each of the r, w, and x operations is permitted to the owner in all the layers. When User A accesses file A, therefore, the file system permits User A to access the first layer directories and the second layer directories in this order and finally permits User A to access file A. Then, the file system also permits the execution of each of the write, read, and execute operations with respect to file A.

On the other hand, User A is not the owner of file B and file C. Therefore, the file system checks group permissions in judging the access of User A to file B and file C. For example, User A belongs to Group B. According to the permission setting values shown in the rectangle on the right side of file B, a user belonging to Group B can perform read and write operations to file B. Therefore, the file system permits User A to perform only the read and write operations with respect to file B. The same shall apply to permissions for file C.

A description will be given next to file access by User B. When User B accesses home, the file system judges the authority of User B to access home. User B is neither the owner of home nor belonging to Group A. Therefore, the file system checks permissions to other persons but the content of each of the permissions to other persons is set to refusal. Accordingly, User B has no authority to access home and therefore cannot access any of the directories and files under home. Although the owner of file B is User B, even the owner of file B cannot access file B since access is blocked in the upper layers.

A description will be given next to file access by User C. Since User C belongs to Group A, User C has the authority to access a directory in each of the layers of home and User A. Accordingly, the file system permits file access by User C till he passes through the second layer directories. Since User C is not the owner of file A, the file system checks group permissions. Since User C belongs to Group A, the file system permits User C to perform the read and write operations to file A. On the other hand, User C is neither the owner of file B nor belonging to Group B so that the file system checks permissions to other persons and does not permit User C to access file B. Since User C is the owner of file C, the file system allows User C to perform each of the write, read, and execute operations to file C.

Thus, the access control management on the Unix performs the management of access to lower layer directories and files, while checking higher layer directories. If higher layer directories have no permission, therefore, access cannot be made to lower layer directories or files. No matter how lower layer permissions are changed, access cannot be made unless higher layer permissions are changed in the same manner. When a new range of access users is to be defined, it is necessary to newly create a group and set permissions to the group.

Besides the permission system described above, there is also another method for access control as used in a relational database. In accordance with the method, the authority of access to a record in a database is determined individually for each of accessors or each of groups comprising of a given number of accessors. Briefly, it is a file system not using a tree structure which sets permissions for each of data tables in the relational database to each of the accessors. The permission setting is carried out by the administrator of the database system.

In a business attempting to provide various services based on the personal information of subscribers, it is important to define and manage a range within which the personal information is disclosed in terms of protecting privacy. Therefore, it is critical to manage permissions for defining and managing the range within which the personal information is disclosed.

According to the prior art technologies, the permission management systems have been provided additionally to files and database servers and performed permission management for each specified item of data. In other words, there has been no such a server which distinguishes permission information from other information and manages only the permission information. For example, the Unix file system performs permission management for each of various items of data including a document and an image managed as files.

In the case of a business which provides a service based on personal information, however, service providing means (server or the like) possessed by a service provider differs physically depending on the type of a service provided to a user. For example, a purchase log at a department store is stored conceivably in a server owned by the department store and the location information of terminals is stored in the server of a terminal management carrier. When a user wishes to change permissions set for the information of his own, individual access made by the user to each of these servers leads to an intricate setting operation and a large load on the user. In addition, it also becomes necessary for a server possessed by a service provider to have an individual database for managing permission settings.

In such permission settings, if a simple permission setting method is adopted, a load on a user is increased proportionally to an increase in an amount of information. Consequently, the risk of the leakage of information resulting from a human operational error is increased even if the permission function of the system is logically completed. In a server which manages registered personal information, the protection of personal information is a most important factor and, if the possibility of the leakage of the information increases even as a result of a human operational error, the credibility of the server may be impaired.

In a business which provides various services based on the personal information of users, settings for determining the disclosability of personal information are frequently changed depending on the current situation, time zone or mood of each of the users. Conventional permission management systems have been developed on the assumption that, once the administrator fixes access control settings, the settings ought not to be changed frequently and, even if changes occur frequently, there is no mechanism for reducing the frequency of changes.

In addition, personal information with permissions has vertical relations among the types thereof. On the other hand, a plurality of permissions such as an open permission, a read permission, and a write permission are set for a given item of personal information. Although permission setting values should be given to a personal information item without causing logic contradiction in a plurality of permissions, they also be given without causing logic contradiction in permission setting values given to personal information items ranked higher or lower than the personal information item for which the permission settings have been fixed.

In the case in which a service provider provides a service to outsiders by using the personal information of users, there are occasions where it is not only necessary to manage the Read-permission and Write-permission settings and determine the accessibility of outsiders to the personal information of the user but also necessary to conceal the very existence of the information in terms of privacy protection. Since the prior art technologies have adopted the management method which determines whether a permission should be given or not in response to a request to reference data to be accessed, it has been impossible to conceal the very existence of the data. In other words, the determination of whether a permission should be given or not suggests the existence of an object to be accessed.

### SUMMARY OF THE INVENTION

An object of the present invent is to provide a server capable of properly managing permissions or a service model using the server.

By providing a management server for dedicatedly managing permission setting values, the present invention solves the problem of the intricate setting operationwhichrequiresindividualpermissionsetting to each of service providers.

In the management server for managing permission setting values, various permission setting values are managed by categorizing them into a plurality of groups in accordance with vertical relations among permissions. This allows proper management of the permission setting values. Instead of categorizing the permission setting values in accordance with the vertical relations, it is also possible to give identification codes which allow the recognition of the vertical relations to permissions and manage the permission setting values in correspondence with the identification information. This allows proper management of not only the permission setting values but also information groups having vertical relations thereamong.

The management server according to the present invention may also have the function of automatically changing permission settings. That is, when a value for setting a permission ranked lower than other permissions is to be changed, values for setting the permissions ranked higher than the permission for which the setting value is to be changed are changed automatically. This allows the permissions to maintain the consistency of the vertical relations thereamong when the permission setting values are changed so that, even when a service which entails frequent changes in permission settings is provided, a load imposed on a user can be reduced. The automatic changing of the permission setting values is performed such that logic contradiction does not occur among a plurality of permissions set for one item of personal information nor among permissions set for personal information items ranked higher or lower than the personal information item of concern.

Since the present invention allows independent management of only permissions, a permission setting operation that has been performed conventionally upon each subscription to a new service can be simplified and usability is enhanced. In addition, the present invention allows more proper management of not only permission information but also information groups having vertical relations thereamong than the prior art technologies.

### BRIEF DESCRIPTION OF THE DRAWINGS

FIG. 1 is a functional block diagram of an apparatus to which a permission setting method according to the present invention has been applied;
FIG. 2 is a view of the apparatus to which the permission setting method according to the present invention has been applied;
FIG. 3 is a view showing a layered structure of user information handled in the apparatus according to the present invention;
FIG. 4 is a view showing a layered structure in terms of user information units of permission setting carried out in the apparatus according to the present invention;
FIG. 5 is a view showing a layered structure in terms of process units of permission setting carried out in the apparatus according to the present invention;
FIG. 6 shows a table of permission settings stored in the apparatus according to the present invention;
FIG. 7 shows a table of permission settings stored in the apparatus according to the present invention;
FIG. 8 shows a table of permission settings stored in the apparatus according to the present invention;
FIG. 9 shows a table of permission settings stored externally of the apparatus according to the present invention;
FIG. 10 is a process flow chart when the apparatus according to the present invention sets permissions;
FIGS. 11A and 11B show a process flow chart when the apparatus according to the present invention reads out permissions;
FIG. 12 is a network diagram of a service using the apparatus according to the present invention;
FIG. 13 is a network diagram when a SIP server is applied to the service using the apparatus according to the present invention;
FIG. 14 is an operation sequence chart of the service using the apparatus according to the present invention;
FIG. 15 is an operation sequence chart when a SIP server is applied to the service using the apparatus according to the present invention;
FIG. 16 is a view showing user information transmitted by the service using the apparatus according to the present invention;
FIG. 17 is a network diagram of a service using the apparatus according to the present invention;
FIG. 18 is a network diagram when a SIP server is applied to the service using the apparatus according to the present invention;
FIG. 19 is an operation sequence chart of the service using the apparatus according to the present invention;
FIG. 20 is an operation sequence chart when a SIP server is applied to the service using the apparatus according to the present invention;
FIG. 21 is a view showing user information transmitted by the service using the apparatus according to the present invention;
FIG. 22 is a network diagram in the case where a plurality of database servers are adopted by using the apparatus according to the present invention;
FIG. 23 is a network diagram in the case where a SIP server is applied and a plurality of database servers are adopted by using the apparatus according to the present invention;
FIG. 24 is an operation sequence chart in the case where the plurality of database servers are adopted by using the apparatus according to the present invention;
FIG. 25 is a view showing information transmitted in the case where the plurality of database servers are adopted by using the apparatus according to the present invention;
FIG. 26 shows a second embodiment of an information management apparatus according to the present invention;
FIG. 27 is a view for explaining a method for managing permissions in the Unix file system;
FIG. 28 is a view showing a layered structure of object information registered by User A in a presence server in EMBODIMENT 1;
FIG. 29 is a view showing permissions set by User A to User B in EMBODIMENT 1;
FIG. 30 is a view showing permissions after User A changed settings in EMBODIMENT 1;
FIG. 31 is a structural view of a network over which a service of the present invention is implemented;
FIG. 32 is a structural view of a network over which a service of the present invention is implemented;
FIG. 33 is a sequence chart of messages transmitted and received over the network of FIG. 28;
FIG. 34 is a view showing a relationship between presence information possessed by User A and User B and permissions;
FIG. 35 is another view showing the relationship between the presence information possessed by User A and User B and permissions;
FIG. 36 is a view showing an example of permission settings;
FIG. 37 is a view showing another example of permission settings;
FIG. 38 is a view showing vertical relations among object information items used in the service shown in FIG. 28;
FIG. 39 is a format for a SIP packet requesting permission settings;
FIG. 40 shows an example of Message stored in the body portion of the SIP packet shown in FIG. 36; and
FIG. 41 is a view showing an XML schemer in a SIP message body portion.

### DESCRIPTION OF THE PREFERRED EMBODIMENTS

In the following embodiments, user attribute information including personal information and presence information will be termed object information and whether an item of the object information of each user is disclosable to an outsider will be termed a permission.

### EMBODIMENT 1

The present embodiment will describe with respect to the structure and operation of a presence server and to a network for implementing a service using the presence server.

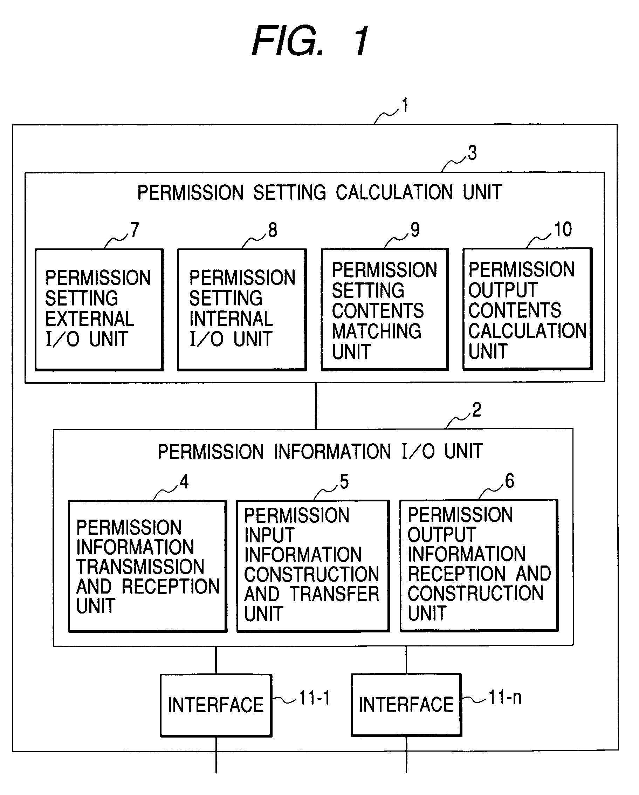

FIG. 1 schematically shows a functional block diagram of the presence server according to the present embodiment. Although the functional block diagram of FIG. 1 shows a logic functional structure implemented by using software, each of functional blocks may also be composed of hardware.

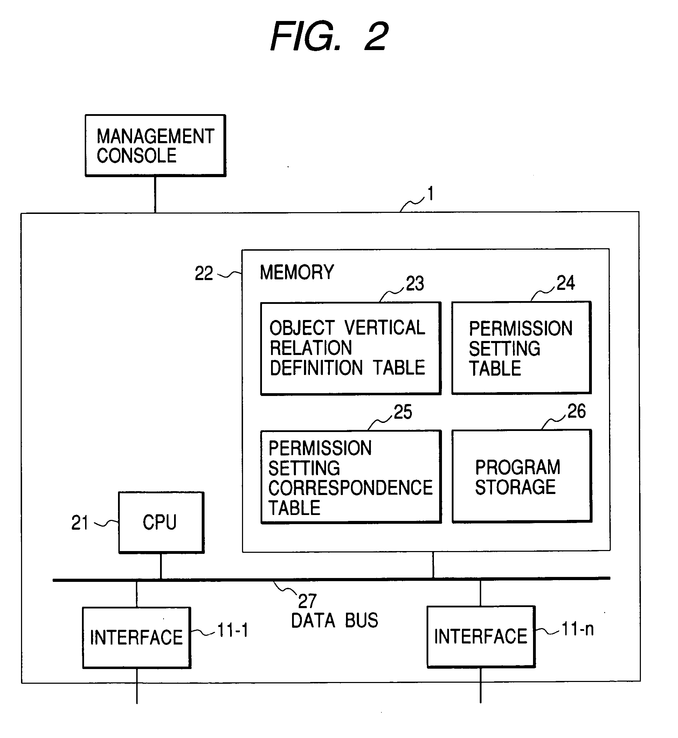

FIG. 2 shows how the functional blocks shown in FIG. 1 are implemented by using hardware. The respective functional blocks shown in FIG. 1 are stored in the program storage 26 of a memory 22 shown in FIG. 2 such that, upon operation, an operation procedure is read out and executed by a CPU. Permission setting values necessary for the individual functional blocks to operate are stored in the memory 22. The CPU 21 retrieves or writes necessary information by reading out entry tables stored in the memory 22 therefrom.

A description will be given next to an overall operation from the time the presence server 1 receives a permission setting request from a user until it writes the contents thereof in a permission setting table 24 of FIG. 2.

When the user transmits the permission setting request for information of his own from a terminal, each of the interfaces 11-1 to 11-n of the presence server 1 receives the transmitted message. In the presence server 1, the message is transferred first to a permission information I/O unit 2 and received by a permission information transmission and reception unit 4. The message is then transmitted to a permission input information construction and transfer unit 5, which extracts a portion corresponding to the permission setting request from the message, constructs the data having a format which can be interpreted in the server, and transfers the constructed user setting request to the permission setting external I/O unit 7 of a permission setting calculation unit 3.

The permission setting external I/O unit 7 transfers the request to a permission setting contents matching unit 9, whereby the contents of settings are matched. At that time, the permission setting contents matching unit 9 reads out information necessary for the matching from the object vertical relation definition table 23 of the memory 22 shown in FIG. 2 via a permission setting internal I/O unit 8. The permission setting contents matching unit 9 also reads out current permission settings from a permission setting table 24 shown in FIG. 2 to check contradiction between the current permission settings and permission settings requested by the user and maintain consistency.

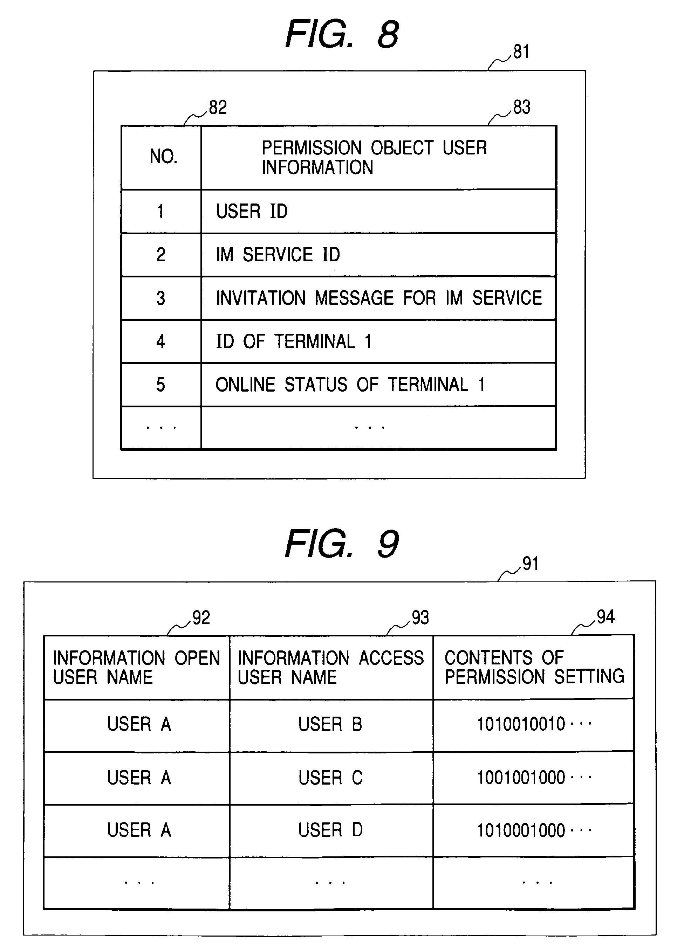

After the permission matching, a correspondence table to store permission information shown in FIG. 8 is then read out from a permission setting correspondence table 25 shown in FIG. 2 such that the permission information is converted to a form corresponding to the description format of the permission setting table 24 of FIG. 2. The permission settings that have undergone the matching and the description format conversion are transferred to the permission setting internal I/O unit 8. Thepermission setting internal I/O unit 8 stores the contents of the settings in the permission setting table 24 present in the memory 22 via a data bus 27 of FIG. 2. When the storage is ended, an end message is sent to the permission setting contents matching unit 9 via the permission setting external I/O unit 7. Upon receiving the end message, the permission setting contents matching unit 9 sends a message notifying that the permission settings have succeeded to the permission information transmission and reception unit 4 via the permission setting external I/O unit 7 and the permission information transmission and reception unit 4 sends the notification of the succeeded permission settings to the user via the interfaces 11.

A description will be given next to an overall operation when the presence server 1 according to the present embodiment reads out the permission information stored in the presence server 1 and sends it to the user in response to the request by the user.

First, a permission acquisition request message from the user received by the interfaces 11-1 to 11-n is transferred to the permission information transmission and reception unit 4. The permission information transmission and reception unit 4 transfers the information to the permission setting external I/O unit 7 of the permission setting calculation unit 3. The permission setting external I/O unit 7 sends the contents thereof to a permission output contents calculation unit 10. In order to acquire the permission information specified by the user from the memory 22, the permission output contents calculation unit 10 issues an acquire instruction to the permission setting internal I/O unit 8.

The permission setting internal I/O unit 8 calls out the contents of the specified permission settings stored in the permission setting table 24 of the memory 22 via the data bus 27 of FIG. 2. Further, the permission output contents calculation unit 10 retrieves the information from the permission setting correspondence table 25 shown in FIG. 2 via the permission setting internal I/O unit 8 and converts the information described in the memory to permission information to be processed by itself. Then, the permission output contents calculation unit 10 performs calculation such that no contradiction occurs in the contents of the settings. At that time, the permission output contents calculation unit 10 reads out information for performing the calculation from the object vertical relation definition table 23 of the memory 22 shown in FIG. 2. After the calculation, the contents are transferred to the permission output information reception and construction unit 6 via the permission setting external I/O unit 7.

The permission output information reception and construction unit 6 constructs a message which can be interpreted by the user client from the contents of the received permission settings and sends a message describing the contents of the permission settings from the interfaces 11 via the permission information transmission and reception unit 4. A management console is an apparatus which allows the administrator of the presence server to set information into the permission setting correspondence table 25 and the object vertical relation definition table 23 shown in FIG. 2.

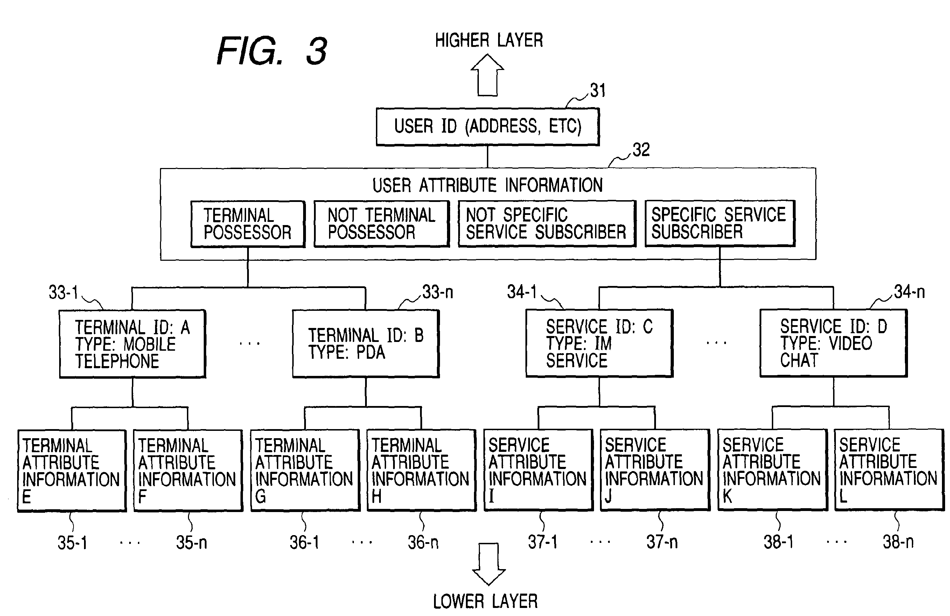

FIG. 3 shows a layered structure model for categorizing items of the object information. In the layered model assumed in the present embodiment, a user ID 31 is located as the highest layer information in the layered model. The user ID may be any ID provided that it allows unique identification of each user. Instead of a numerical value or a code, a combination of a name, an address, and the like may also be used as the user ID. User attribute information 32 is positioned in the layer immediately under the user ID. The user attribute information is information indicative of, e.g., whether the user has a mobile telephone or is subscribed to a specified service. It may also be said that the user attribute information is information indicative of whether the user intends to receive the specified service or not. There are cases where the user has a plurality of terminals or no terminal at all. The same shall apply to services.

Terminals IDs 33-1 to 33-n and service IDs 34-1 to 34-n are positioned in the layer immediately under the user attribute information. Although it is considered in the present model that, if the terminal ID and the service ID are identified, the type of the terminal and the type of the service are automatically determined, it is also possible to locate terminal type information and service type information in the layer immediately under the ID information, separately from the ID information. For example, the phone number, the SIP (Session Initiation Protocol), the URI, or the like may be used as the terminal ID. The service ID is, e.g., an ID assigned to a service subscriber by a service provider. Needless to say, the terminal type information is information indicative of whether the terminal is, e.g., a PDA 33-n, a mobile telephone 33-1, a fixed terminal such as a PC, or the like. The service type information is information indicative of whether the service to which the user is subscribed is, e.g., an IM service 34-1 or a video chat service 34-n.

Various items of attribute information 35-1 to 35-n to 38-1 to 38-n of individual terminals and services are positioned in a layer immediately under the terminal IDs 33-1 to 33-n and the service IDs 34-1 to 34-n. The terminal attribute information is information on the attributes of individual terminals such as, e.g. , the on-line status, communication status, location information, and the like of each of the terminals. The service attribute information is information required by each of service providers to provide a service. For a horoscope service provider, e.g., information on the birth dates and constellations of service subscribers correspond to the service attribute information. The presence server 1 stores the various obj ect information items in accordance with the layered model of FIG. 3.

Although the four-layered model is shown in FIG. 3, it is also possible to further fragment the structure and store the object information in a structure composed of a larger number of layers. The object information may also be stored in a simpler structure composed of three or two layers. In most actual cases, the second layer user attribute information need not be considered because most of the users who do not have any terminal or who are not subscribed to any service do not have user IDs in the first place. However, there are cases where it is preferred to provide a layer for the attribute information 32 depending on the convenience of users and service providers. For example, if a user temporarily stops receiving a service and intends to resume service reception after a while or if a service provider intends to temporarily suspend service provision to the user (e.g., in the case where the user cannot pay the service fee), the previous user ID can be used conveniently when the service is resumed.

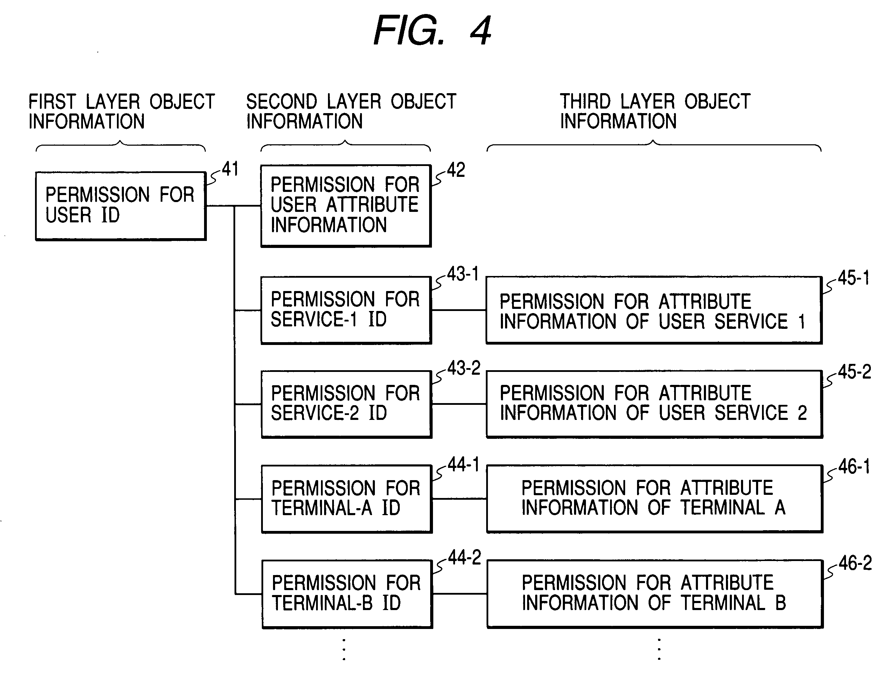

FIG. 4 is a view showing the vertical relations among permissions set for various object information items. The layered structure of the permission information possessed by the presence server 1 is similar to the layered structure of the object information. The presence server 1 holds the information indicative of the layered structure model in the object vertical relation definition table 23 of the memory 22 shown in FIG. 2. At the time of calculating the permission information, the permission setting contents matching unit 9 and the permission output contents calculation unit 10 call and use the information when necessary. If a comparison is made between FIGS. 3 and 4, the first layer in the structure of FIG. 4 corresponds to the user ID layer of FIG. 3.

The presence server 1 recognizes a permission 41 for a user ID as a highest layer permission and stores it. The presence server 1 stores a permission 42 for user attribute information, a permission 43 for each of service IDs, and a permission 44 for each of terminals IDs in the layer immediately under the permission 41. The presence server 1 further stores a permission 45 for service attribute information and a permission 46 for terminal attribute information in the layer immediately under the permissions 42, 43, and 44. The presence server 1 stores as many sets of permission setting information thus structured as the number of combinations of users whose object information has been set and outsiders (including not only service providers but also so-called outsiders) who intend to access the information.

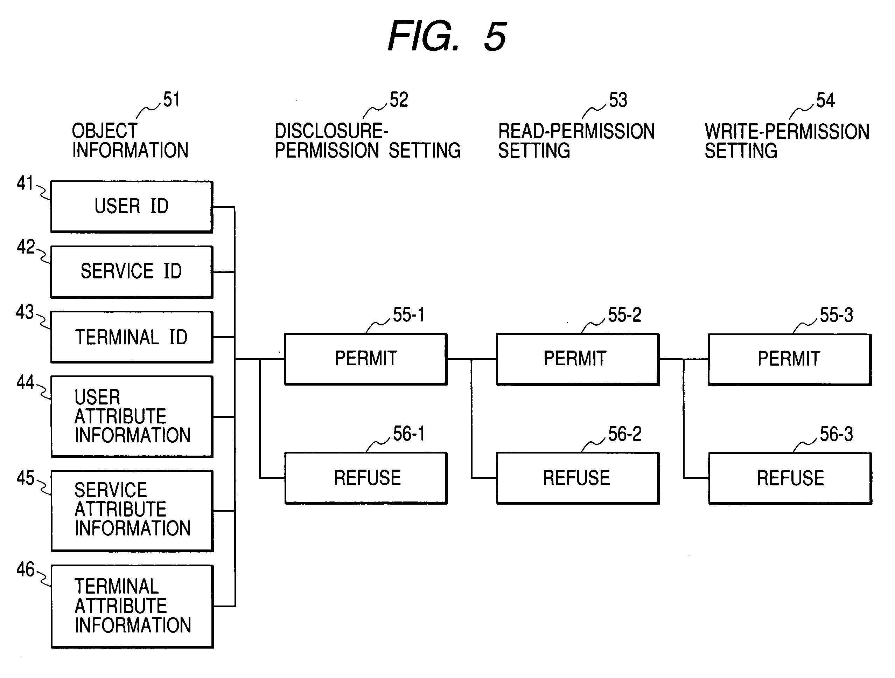

FIG. 5 is a view showing a structure of permission setting types stored in relation to the object information handled by the presence server 1 according to the present invention. Permission setting values may have a plurality of values depending on the degree to which a given object information item is intended to be disclosed to an outsider. The present embodiment has provided three types of permission settings that can be assigned for each of the obj ect information items 41 to 46, which are the disclosure-permission setting 52, the Read-permission setting, and the Write-permission setting. To each of the setting types 52 to 54, Permit 56 or Refuse 57 can be set.

The disclosure-permission setting 52 is for determining whether the information should be opened to an information access user or not. If "Permit" is set as in 55-1, the information is opened to the information access user and, if "Refuse" is set as in 56-1, the information is concealed the information access user from view. The information access user with the setting of "Refuse" is no more allowed to know the possession of the information by an information open user. For example, if "Refuse" is set to the disclosure-permission setting 52 for the user ID 41, the information access user can't know the user ID of the information open user. In short, the presence of the information open user can be concealed from an outsider. Conversely, if the function of concealing the object information is added to the presence server, a parameter of the disclosure-permission setting should be provided for each permission setting type.

The Read-permission setting 53 is for determining whether a read operation to the information should be permitted or refused to the information access user. If "Permit" is set as in 55-2, the information access user is permitted to access the information and, if "Refuse" is set as in 56-2, the information access user is notified upon requesting access to the information that the disclosure of the information has been refused.

The Write-permission setting 54 is for determining whether a write operation to the information should be permitted or refused to the information access user. If "Permit" is set as in 55-3, the information access user is permitted to register or change the information. In other words, it becomes possible for an outsider to change the information possessed by the information open user in place of the information open user. Moreover, these three permission settings can be designated for each item of object information.

These three permission settings have a layered structure. The presence server 1 handles the permission information by fixing the disclosure-permission setting 52 as the highest layer setting, the Read-permission setting 53 as the immediately lower layer setting, and the Write-permission setting 54 as the lowest layer setting for each of the object information items 41 to 46. The contents of these three settings have rules. For example, if the lowest layer Write-permission setting 54 is "Permit", the higher layer Read-permission setting 53 is "Permit" and the highest layer disclosure-permission setting 52 is also "Permit". If the highest layer disclosure-permission setting 52 is "Refuse", each of the lower layer Read-permission setting 53 and Write-permission setting 54 is also "Refuse". Thus, if the upper layer setting is "Refuse", the lower layer setting is accordingly "Refuse" and, if the lower layer setting is "Permit", the higher layer setting is also "Permit". This is because, if information is accessible, the information should naturally be disclosed and, if the information is changeable, the information should naturally be accessible and ought to have been disclosed. Thus, the three settings must be fixed in accordance with a method which does not cause contradiction in the individual layers.

Besides the foregoing disclosure-permission setting 52, Read-permission setting 53, and Write-permission setting, the types of permission settings can be designated freely by the user of the presence server via the management console of FIG. 2. For example, more fragmented disclosure levels can be set if the number of the types of settings is increased and, conversely, the parameter of the disclosure-permission setting can be deleted if the concealing function is unnecessary. In either case, the present embodiment allows proper management of the object information by categorizing the object information items into a plurality of groups and imparting vertical relations thereamong. The information is also held in the object vertical relation definition table 23 of the memory 22 shown in FIG. 2 such that it is called and used by the permission setting contents matching unit 9 and the permission output contents calculation unit 10 when necessary at the time of calculating the permission information.

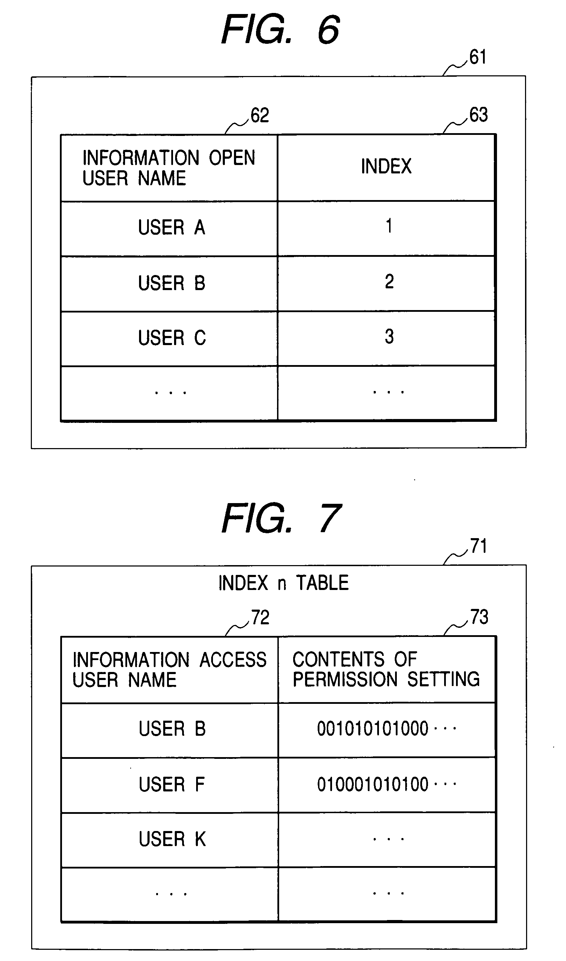

FIGS. 6, 7, and 8 show examples of entry tables for permission settings which are actually stored in the presence server 1 according to the present invention. In the case of storing the permission information set by a user in a memory region as denoted by 24 in FIG. 2, the presence server 1 stores the permission information in three tables 61, 71, and 81.

A description will be given herein below to the operation when the presence server 1 receives a permission setting request from a user and stores the contents thereof. The table 61 shown in FIG. 6 and the table 71 shown in FIG. 7 are stored in the permission setting table 24 of the memory 22 shown in FIG. 2, while the table 81 shown in FIG. 8 is stored in the permission setting correspondence table 25 of the memory 22 shown in FIG. 2.

First, the user ID of the user disclosing his or her information is retrieved from an information open user name field 62 in the table 61 shown in FIG. 6 and an index corresponding thereto is read out therefrom. The information open user 62 used herein indicates a user who opens object information. Briefly, the information open user 62 may also be considered as a user who receives any service based on the object information from a service provider.

FIG. 7 shows an entry table in which outsiders who can access object information and permission setting values for the object information are recorded. The entry table of FIG. 7 is prepared for each of the indices shown in FIG. 6. For example, the user with the information open user name User A has an entry table of permission settings identified with the index 1. User B has an entry table identified with the index 2. The same shall apply to User C and the subsequent users.

The presence server 1 searches the information access user name field 72 of one of the index tables 71 which corresponds to the index number read out from the table 61 and writes permission settings in the field of contents of permission setting 73 corresponding thereto. The information access user 72 used herein indicates a user (or an application server) who can view the object information disclosed by the information open user or changes the object information in place of the information open user. If the information access user name cannot be found as a result of searching the information user name field, the permission settings are regarded as new ones and a new information access user name and the contents of the permission settings are added to the individual fields of the index table 71. If a setting request from the user is for the deletion of permissions, the information access user name specified from the index table 61 is deleted from the information access user name field 72 and the contents of permission setting field 73 corresponding thereto is also deleted.

The presence server 1 also performs the same operation when it receives a request to acquire permission settings from the user and reads out the contents thereof so that it reads out the permission settings from the contents of permission setting 73. The presence server 1 prepares the index tables 71 as many as the number of users who open information. Consequently, each of the information open users has the index table.

In the table 71, the information access users 72 and the contents of permission setting 73 for the information access users are described. The field of the contents of permission setting 73 is comprised of, e.g., 64-bit binary sequences. The 64 bits are divided into 2-bit groups such that each of the 2-bit groups represents one of the permission settings for individual items of information.

The table 81 of FIG. 8 shows the correspondences between the 2-bit values assigned to the permission settings and the items of target object information. The No. 82 in the table 81 shows the ordinal positions of the 2-bit groups in the 64-bit sequence and the items of target object information are defined as permission object user information 83 corresponding to the No. 82. From the information described in the table 81, e.g., it can be seen that the first two bits of the contents of permission setting 73 represent a permission for the user ID corresponding to the number 1 in the No. field 82 and the next two bits represent a permission for the IM service ID corresponding to the number 2 in the No. field 82.

If a new information open user is to be added, the information open user name is added to the entry table 61. At this time, the server checks the index number in an idle state to be described in the index field 63 and automatically sets the index number to the new information open user, while preparing the index table 71 for the newly added information open user. Conversely, if the information open user currently registered is to be deleted, the index table 71 for the user to be deleted is deleted, the user name to be deleted is searched in the information open user name field 62 of the entry table 61, and then the information is deleted therefrom.

FIG. 8 shows a table to be referred to when the server interprets the contents of the permission settings shown in FIG. 7. The reference table 81 of FIG. 8 is composed of the No. field 82 and a permission object information field 83. The No. field 82 has numbers indicative of the respective ordinal positions of the 2-bit groups composing the 64-bit binary sequences in the contents of permission setting 73. The permission object information field 83 describes the correspondences between the individual 2-bit groups and the items of information represented thereby. By thus combining the contents of permission setting 73 with the table 81, it becomes possible to read or write the correspondences between the individual information items and the permission settings from or in the table 81. The following four patterns of permissions can be set in correspondence with the 2-bit binary numbers.
(1) All of the disclosure-permission setting 52, the Read-permission setting 53, and the Write-permission setting 54 are "Refuse".
(2) The disclosure-permission setting 52 is "Permit" and each of the Read-permission setting 53 and the Write-permission setting 54 is "Refuse".
(3) Each of the disclosure-permission setting 52 and the Read-permission setting 53 is "Permit" and the Write-permission setting 54 is "Refuse".
(4) All of the disclosure-permission setting 52, the Read-permission setting 53, and the Write-permission setting 54 are "Permit".

It is possible to represent setting values for various permission levels by corresponding, e.g., respective setting values 00, 01, 10, and 11 to the respective settings defined in the foregoing (1), (2), (3), and (4). Although the present embodiment assumes the three states of the disclosure-permission setting, the Read-permission setting, and the Write-permission setting as the permission levels, it is also possible to represent respective states on individual levels by using binary bits even if four or more levels of settings are provided by further fragmenting the permission levels. For examples, 2³ = 8 levels of permission settings can be fixed if 3-bit binary numbers are used.

In the case of adding a new item of object information, a new entry is added to the reference table 81. The addition of the entry allows permission settings for the obj ect information item to be assigned to the sequence of bits shown in the contents of permission setting field 73 of the index table 71 which has not been used heretofore. Conversely, in the case of deleting an object information item, one of the entries is deleted from the reference table 81. The sequence of bits from which the entry has been deleted is no more referred to at the time of setting permissions or acquiring permissions so that it becomes an unused sequence of bits.

Thus, the present embodiment has enabled management of the permission setting values considering the vertical relations among permission levels by giving numeric value codes capable of representing the vertical relations to the permission setting values.

The permission setting table can be stored in an external database or the like for back-up and like purposes. FIG. 9 shows a format for the permission setting table to be stored in external storage means. The table 91 is composed of an information open user name field 92, an information access user name field 93, and a contents of permission setting field 94 and describes the same contents as in the tables 61 and 71. The permission object information of the table 81 is stored in, e.g., the setting file of the server for back-up and like purposes.

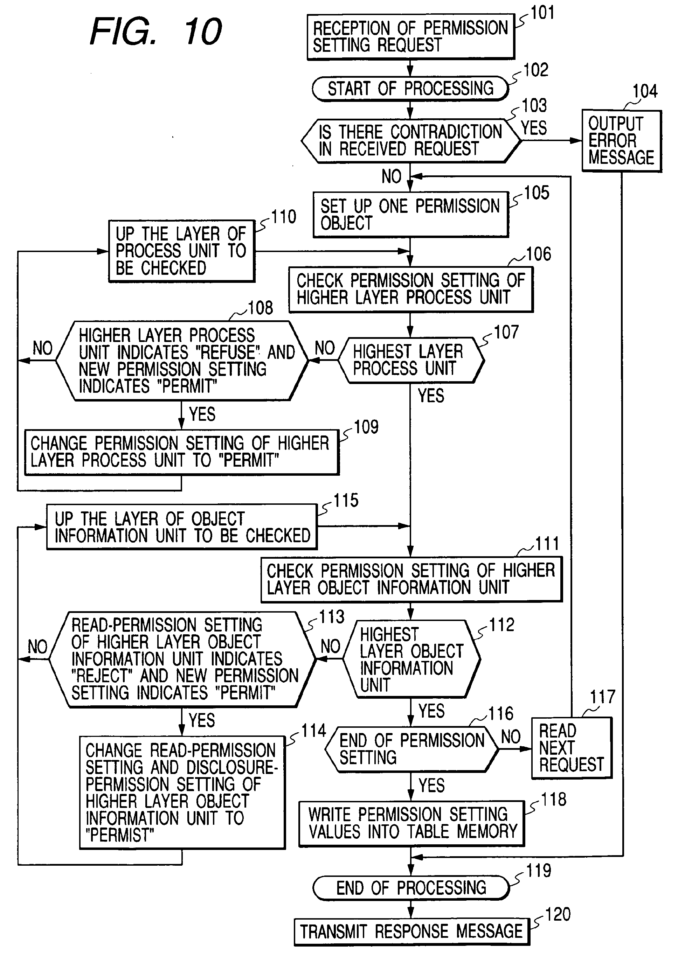

FIG. 10 is a flow chart showing the contents of processing performed in the permission setting contents matching unit 9 of FIG. 1 when the presence server 1 received a permission setting request from a user. The permission setting contents matching unit 9 is a processing block for calculating, from the contents of the permission setting request from the user, the contents of the permission settings which do not contradict with the vertical relations shown in FIGS. 4 and 5 and accomplishing the matching of the contents of the settings. A description will be given to the operation of this block.

Upon receiving the permission setting request from a user in Step 101, the permission setting contents matching unit 9 acquires program information from the program storage 26 of FIG. 2 in Step 102 and starts processing. After starting the processing, the permission setting contents matching unit 9 first checks in Step 103 whether the permission setting request from the user is contradictory to the vertical relations shown in FIG. 4 and 5. If it finds contradiction, the permission setting contents matching unit 9 outputs an error message in Step 104, ends the processing in Step 119, and sends a message for notifying the user of the failed permission setting to the permission setting external I/O unit 7 shown in FIG. 1 in Step 120. If there is no contradiction, the permission setting contents matching unit 9 sets one permission object in Step 105. In the case where permission settings for a plurality of object information items are requested simultaneously, the processing is performed for the settings described first.

Next, in Step 106, the permission setting contents matching unit 9 reads out an object vertical relation table in terms of process units from the obj ect vertical relation definition table 23 shown in FIG. 2 to maintain consistency among the vertical relations in terms of the process units shown in FIG. 5 in response to the setting request and checks a permission in a higher layer process unit. If the setting request is for the Write-permission setting, the Read-permission setting is checked. Since there is a possibility that the setting request is for the highest layer disclosure-permission setting, it is checked in Step 107 whether the setting request is for the setting in the highest layer process unit. If it is for the setting in the highest layer process unit, the program sequence advances to Step 111. If it is not for the setting in the highest layer process unit, the program sequence advances to Step 108 where a comparison is made between the content of the setting in the process unit being checked and the content of the setting in a higher layer process unit. In Step 108, if the permission setting in the higher layer process unit is "Refuse" and the permission setting in the process unit being checked is "Permit", contradiction occurs in the vertical relations of FIG. 5. In this case, the permission setting in the higher layer process unit is changed to "Permit" in Step 109. If there is no contradiction, the permission setting in the higher layer process unit is not changed to "Permit".

Next, in Step 110, the object to be checked for the permission settings is switched to the immediately higher layer. For example, if the Write-permission setting is currently checked, the object to be checked is changed to the Read-permission setting in Step 110. Thereafter, Step 106 and the subsequent steps are performed again to form a repetition loop which is repeatedly performed until the highest layer disclosure-permission setting is checked. When the checking of the highest layer process unit is ended, the repetition loop ends in Step 107 and the program sequence advances to Step 111. Although it is necessary to perform the repetition loop in Steps 106 to 110 while considering the vertical relations among the process units shown inFIG. 5, the vertical relations have been stored preliminarily in the register of the presence server 1.

In Step 111, the object vertical relation table in terms of information units is read out from the object vertical relation definition table 23 shown in FIG. 2 and the permission information currently set is read out from the permission setting table 24 shown in FIG. 2 such that the contents of the obj ect information items for which permission setting is currently performed and the contents of the current permissions setting for the higher layer object information item are matched by eliminating contradiction. However, since there is a possibility that the object information item for which permission setting is currently performed is the user ID in the highest information unit layer shown in FIG. 4, it is checked in Step 112 whether the object information item for which permission setting is currently performed is in the highest information unit layer.

If the object information item is in the highest information unit layer, the program sequence advances to Step 116. If it is not in the highest information unit layer, a comparison is made in Step 113 between the Read-permission setting for the obj ect information item to which the permission information is currently set and the Read-permission setting for the object information item which is higher in rank in the vertical relation chart shown in FIG. 4. If the Read-permission setting for the higher layer object information item is "Refuse" and the newly fixed Read-permission setting for the object information item is "Permit", such a contradictory state is observed that access to the higher layer object information item is refused but access to the lower layer object information item is permitted. Accordingly, each of the disclosure-permission setting and Read-permission setting for the higher layer object information item is changed to "Permit" in Step 114, whereby the contradiction in the vertical relations is eliminated. If the condition in Step 113 is not satisfied, the processing in Step 114 is not performed.

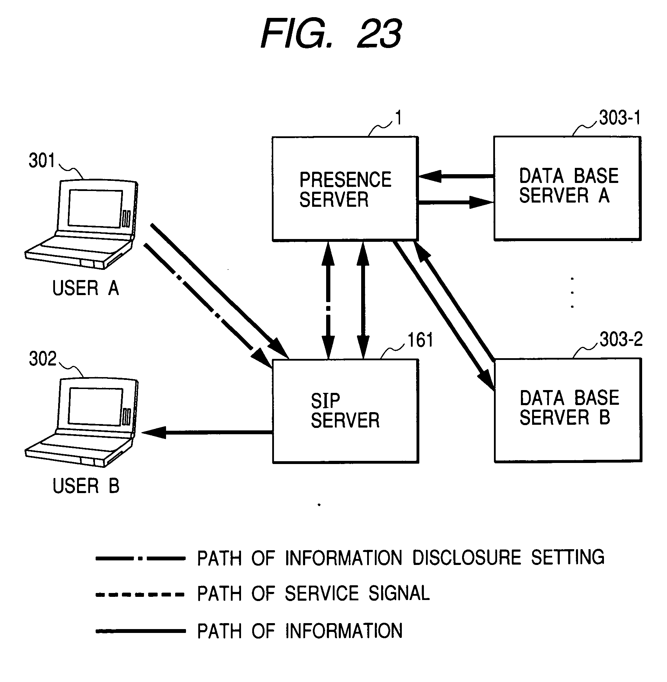

When the processing is ended, the object to be checked for the permission settings is switched to the object information item immediately higher in layer than the currently checked object information item, and the process starting at Step 111 is performed again. The repetition loop is performed until the object to be checked reaches the highest layer user ID. When the object to be checked for the permission settings reaches the highest layer, the program sequence advances from Step 112 to Step 116. Although it is necessary to perform the process loop in Steps 111 to 115 while considering the vertical relations among the object information units shown in FIG. 4, the information has been stored in the object vertical relation definition table 23 of FIG. 23. The relations among the settings can be set freely by the user during the operation of the presence server 1.

When the processing has advanced, it is checked in Step 116 whether all the settings are fixed completely. When the user requests the permission settings for a plurality of object information items, the program sequence advances to Step 117, reads out the next permission setting object, and repeats the process starting from Step 105 for the permission setting object. When the processing for all the permission setting objects is completed, the program sequence advances from Step 116 to Step 118 where the matched permission setting values are written into the permission setting table 24 of the memory 22 shown in FIG. 2 and the processing is ended in Step 119. Upon receiving a notification of the end of the write operation, the permission setting contents matching unit 9 transmits a message to the permission setting external I/O unit 7 shown in FIG. 1 in Step 120 to return a message indicative of the succeeded permission setting to the user.

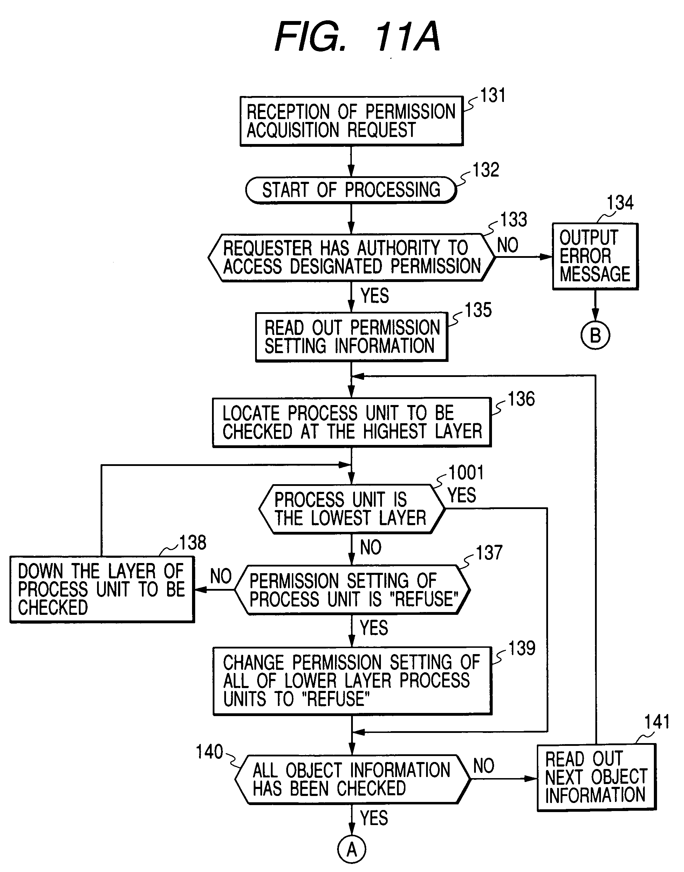

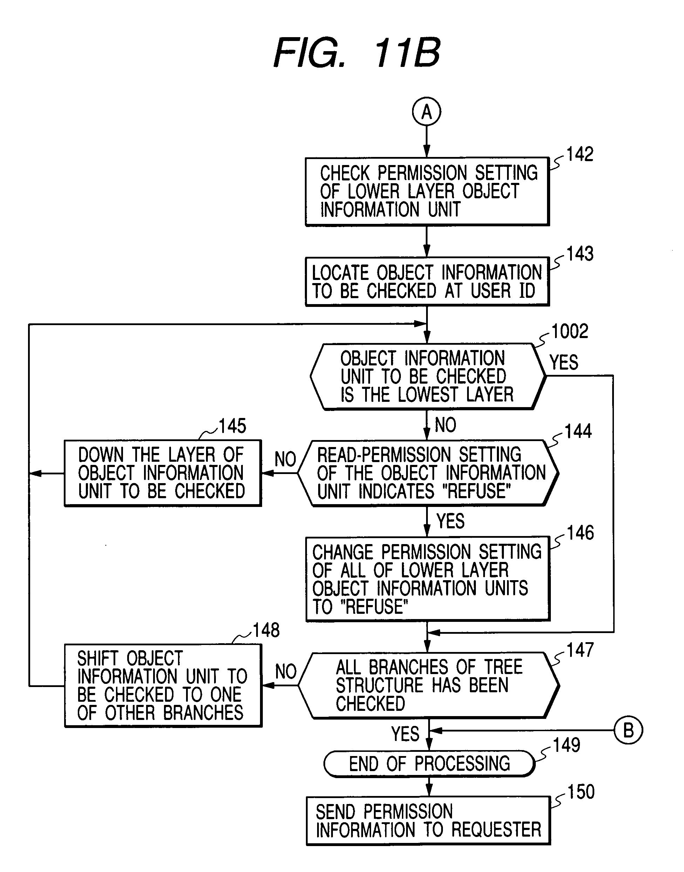

FIGS. 11A and 11B show a flow chart of the processing performed in the permission output contents calculation unit 10 of FIG. 1 when the presence server 1 received a permission acquisition request from a user. The permission output contents calculation unit 10 is a processing block which receives, from the permission setting external I/O unit 7 shown in FIG. 1, a permission acquisition request from the user, reads out permission settings from the permission setting table 24 of FIG. 2, checks whether the settings are contradictory to the vertical relations shown in FIGS. 4 and 5, calculates the contents of the permission settings if there is contradiction, and returns the contents of the permission settings after the calculation to the user. A description will be given to the processing method in this block.

On receiving, from the permission setting external I/O unit 7 shown in FIG. 1, the permission information acquisition request from the user in Step 131, the permission output contents calculation unit 10 reads out the contents of processing from the program storage 26 shown in FIG. 2 and starts the processing in Step 132. After starting the processing, the permission output contents calculation unit 10 checks in Step 133 whether the user requesting the acquisition of permissions is authorized to acquire the requested permission settings. If the user is not authorized, the program sequence advances to Step 134 where an error message is outputted, the processing is ended in Step 149, and a message is sent to the permission setting external I/O unit 7 shown in FIG. 1 to notify the user who has sent the permission setting acquisition request that the user does not have the authority.

If the user has the authority in Step 133, the program sequence advances to Step 135 where the permission settings are read out from the permission setting table 24, and vertical relations as shown in FIG. 4 are read out from the object vertical relation definition table 23 shown in FIG. 2 for the calculation of contradiction in the vertical relations. Then, the program sequence advances to Step 136 where it is checked whether the permission settings for individual items of the object information in terms of the process units have any contradiction in the vertical relations thereamong shown in FIG. 5. At this time, it is necessary to check the permission settings for the plurality of object information items. The checking is performed in the order of the numbers in the No. 82 of the table 81 in FIG. 8, i.e., the permission settings are read out consecutively from the first 2 bits in the contents of permission setting 73 of FIG. 7.

In the checking of the permission settings in terms of the process units, the process unit to be checked for the permission setting is first located to the highest layer process unit, i.e., to the disclosure-permission setting in Step 136.
Then, the program sequence advances to Step 1001 where it is checked whether the process unit being checked is the lowest layer process unit. Since the first time loop is checking the highest layer disclosure-permission setting, the process unit being checked is not the lowest layer process unit and the program sequence advances to Step 137 where it is checked whether the disclosure-permission setting is "Refuse".

If it is "Refuse", the lower layer settings, i.e., each of the Read-permission setting and the Write-permission setting should naturally be "Refuse", so that each of the Read-permission setting and the Write-permission setting is set to "Refuse". If it is "Permit", the program sequence advances to Step 138 where the object to be checked for the permission settings is switched to the immediately lower layer. For example, if the process unit currently checked for the permission setting is the disclosure-permission setting, the object to be checked for the permission settings is changed to the Read-permission setting in the immediately lower layer.

Thereafter, the program sequence advances to Step 1001 where it is resumed a repetition loop until the object to be checked for the permission settings reaches the lowest layer process unit.

When the lowest layer process unit is reached, the program sequence advances from Step 1001 to Step 140 where it is determined whether the checking has been completed for all the object information items. If the checking has not been completed, the program sequence advances to Step 141 where the setting for the next object information item is read out and the process starting at Step 136 is repeated. If the checking has been completed, the program sequence advances next Step 142 where it is checked whether the vertical relations in terms of the object information units shown in FIG. 4 have any contradiction. In this process, the object information item to be checked is located at first to the user ID in Step 143. Then, in Step 1002, it is checked whether the object information item being checked is the lowest layer or not. Since the object information item currently checked is the highest layer user ID, the program sequence advances to Step 144 where it is determined whether the Read-permission setting being checked is "Refuse". If it is "Refuse", it can be judged that there is no intention to open the lower layer object information items so that the contents of the permission settings for all the lower layer object information items are changed to "Refuse" in Step 146. If the Read-permission setting is "Permit" in Step 144, the program sequence advances to Step 145 where the object to be checked for the permission settings is switched to a lower layer. However, there are cases where a plurality of object information items are present in layers lower than the user ID. In those cases, arbitrary selection is made from among the lower layer object information items and the object to be checked for the permission settings is shifted to the selected object information item. At this time, the lower layer object information item that has been checked is recorded. After that, Step 1001 is resumed such that a repetition loop is performed until the lowest layer object information item is checked.

When the object to be checked has reached the lowest layer object information item, the program sequence advances from Step 1002 to Step 147 where it is examined whether all the branches of the tree structure of FIG. 4 have been checked based on the lower layer object information item having been checked and recorded. If the checking of all the branches has not been completed, the program sequence advances to Step 148. In Step 148, the object to be checked for the permission settings is shifted to the object information item of a branch that has not been checked yet. Then, the program sequence advances to Step 1002 to perform a repetition loop until the checking of all the branches for the permission settings is completed. If the checking of all the branches for the permission settings has been completed in Step 147, the program sequence advances to Step 149 where the processing is ended. Thereafter, a message is sent to the permission setting I/O unit 7 shown in FIG. 1 to return the permission information having been checked to the user in Step 150.

The processing of FIG. 11 performed by the permission output contents calculation unit 10 is not mandatory. It is also possible to send the permission settings acquired from the permission setting table 24 as they are to the user without executing the process flow shown in FIG. 11 so long as the permission output contents calculation unit 10 trusts the processing by the permission setting contents matching unit 9 and it is guaranteed that the permission settings are not written in the permission setting table 24 in another path. By executing the process flow shown in FIG. 11, however, the possibility of the leakage of the information unintended by the information open user can further be reduced.

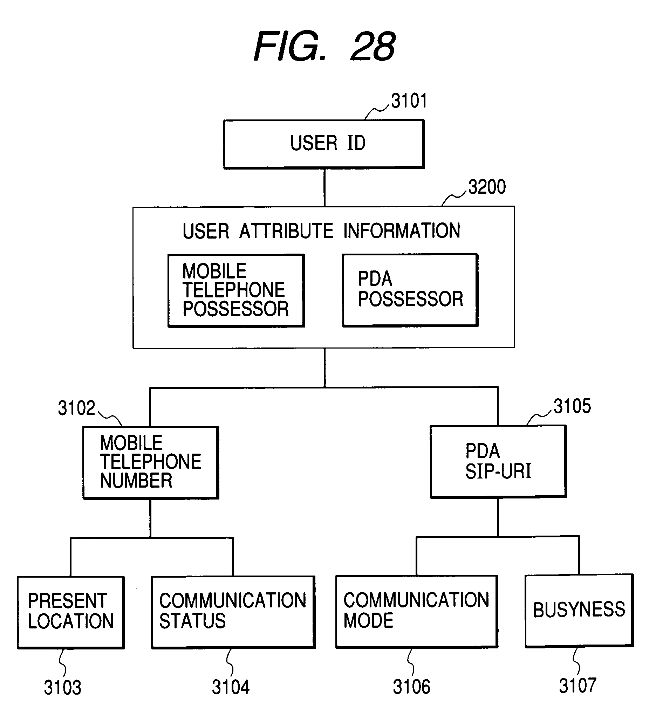

Referring to FIGS. 28 to 30, a description will be given how the permission setting contents matching unit 9 shown in FIG. 1 maintains consistency between the permission settings requested by the user and stores the permission settings resultantly in the permission setting table 24 shown in FIG. 2.

FIG. 28 shows the object information items currently registered by User A in the presence server 1. The user ID 3101 of User A is located in the highest layer and, as indicated by 3200, User A has a mobile telephone and a PDA. Accordingly, a mobile telephone number 3102 is located as the mobile telephone ID in the immediately lower layer and an SIR-URI 3105 is located as the ID of the PDA on the same rank as the mobile telephone number 3102. The mobile telephone further has a current mobile location 3103 in the immediately lower layer and a mobile communication status 3104 on the same rank as the current mobile location 3103. On the other hand, the PDA further has a communicationmode 3106 in the immediately lower layer and busyness 3107 on the same rank as the communication mode 3106. Thus, the presence server 1 holds the obj ect information items registered by User A by imparting vertical relations thereto.

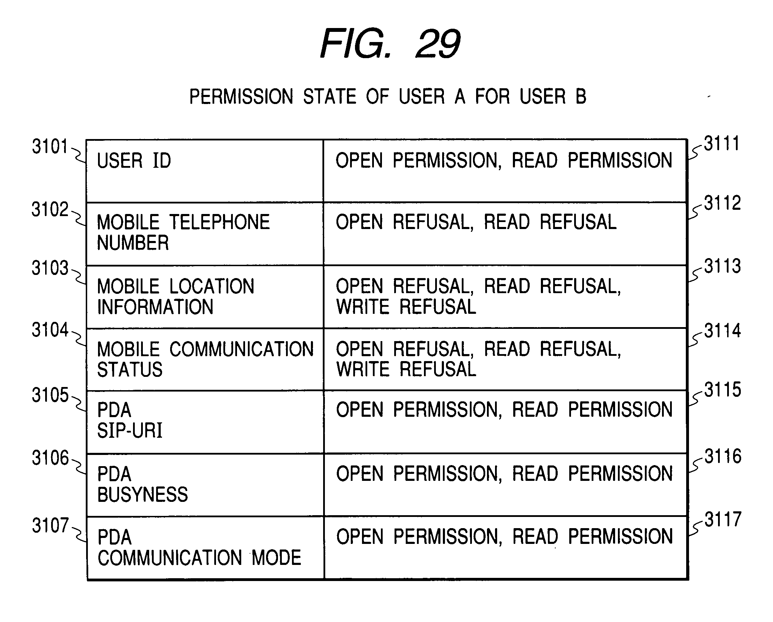

FIG. 29 shows the permission settings currently fixed by User A to User B. From the drawing, it will be understood that, at present, User A has set for User B, the open permission and the read permission for the user ID 3101 as shown in 3111. Likewise, permission settings as shown in 3112 to 3117 have been fixed for the obj ect information items from the mobile telephone number 3102 to the PDA communication mode 3107.

At this situation, it is assumed that the presence server 1 has received a request from User A for changing the Read-permission setting of the mobile location information 3102 for User B to "Permit". In response to the request, the permission setting contents matching unit 9 reads out the vertical relations shown in FIG. 5 from the object vertical relation definition table 23 shown in FIG. 2. Since the permission setting request has occurred with respect to the read operation, the presence of the disclosure-permission setting as the higher layer setting is recognized. In this case, since the user has requested the Read-permission setting, it is judged that the higher layer disclosure-permission setting is also "Permit".

In order to match the permission settings based on the vertical relations among objects, the vertical relation information shown in FIG. 28 is read out from the object vertical relation definition table 23 shown in FIG. 2, wherein it is recognized the mobile telephone number 3102 and the user ID 3101 resides as objects higher in rank than the mobile location information 3103 for which permission setting has been requested. In addition, the currently set permission information shown in FIG. 29 is read out from the permission setting table 24 shown in FIG. 2. Since the permission setting request from the user is for changing the Read-permission setting of the mobile location information to "Permit", the disclosure-permission setting and Read-permission setting for the higher layer mobile telephone number 3102, which have been open refusal and read refusal as shown in 3112 of FIG. 28, are changed to open permission and read permission.

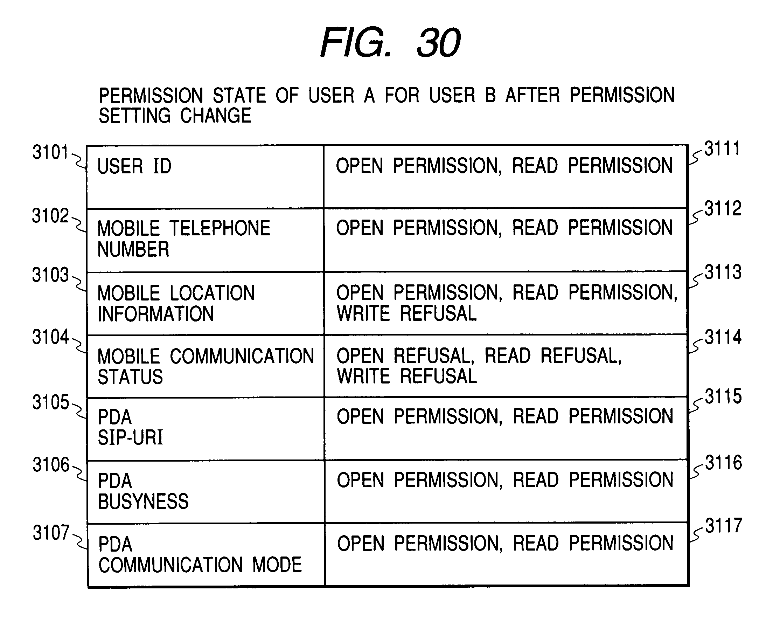

Although the far higher layer user ID 3101 is also checked, the settings therefor which have originally been open permission and read permission, as shown in 3111, are left unchanged. As for the mobile communication status 3104, the PDA SIP-URI 3105, the PDA busyness 3106, and the PDA communication mode 3107, since it can be seen from the vertical relation chart shown in FIG. 28 that they are information at locations irrelevant to the mobile location information for which the user sent the permission setting request, their contents are left unchanged. Consequently, the permission information registered in the permission setting table 24 of the memory 22 shown in FIG. 2 changes to the contents shown in FIG. 30 after the permission setting request from the user.

It can be seen from FIG. 30 that, although User A has issued only the request to change the permission setting for the mobile location information to read-permission, the mobile location information with the disclosure-permission setting is registered as shown in 3213 and the mobile telephone number with the disclosure-permission setting and the Read-permission setting is registered as shown in 3212 as a result of the processing performed by the permission setting contents matching unit 9 shown in FIG. 1.

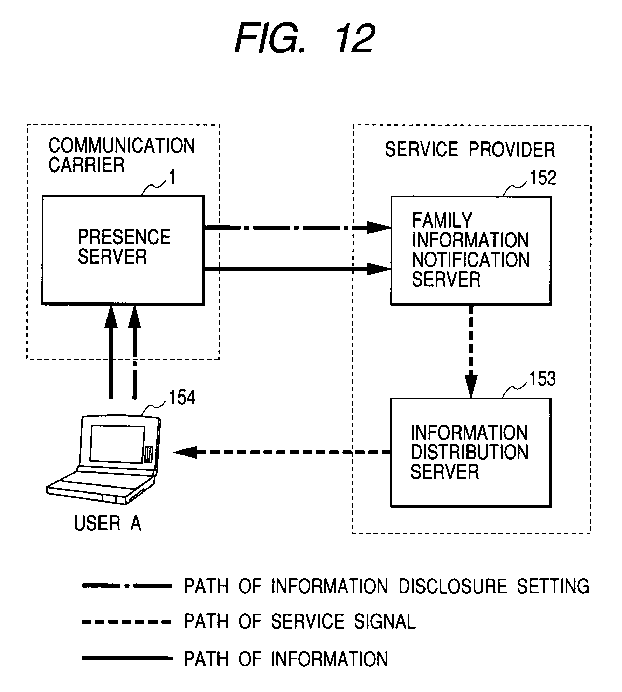

FIG. 12 shows an example of a service model using the presence server according to the present embodiment. User A denoted by 154 in FIG. 12 is a user who registers information in the presence server 1 and receives a service from a family information notification server 152. The service holds current information on User A and his family and notifies, if the location information 216 of User A and that of a family member get close to each other, User A and the family member of their approach with an alarm sound. Although the description has been given on the assumption that the presence server is owned by a communication carrier and the family information notification server 152 and an information distribution server 153 are owned by a service provider in FIG. 12, there are cases where the communication carrier owns the family information notification server 152 and the information distribution server 153 and provides the service as a business.

A description will be given to the overall operation of the service model. First, User A denoted by 154 registers information of his own and the information disclosure setting thereof in the presence server 1, requests the family information notification server 152 to provide the service, and receives the service via the information distribution server 153. In another possible application of this service model, each of the family members registers a product item he or she intends to buy so that another family member who approaches a shop where the item is available is notified of the item.

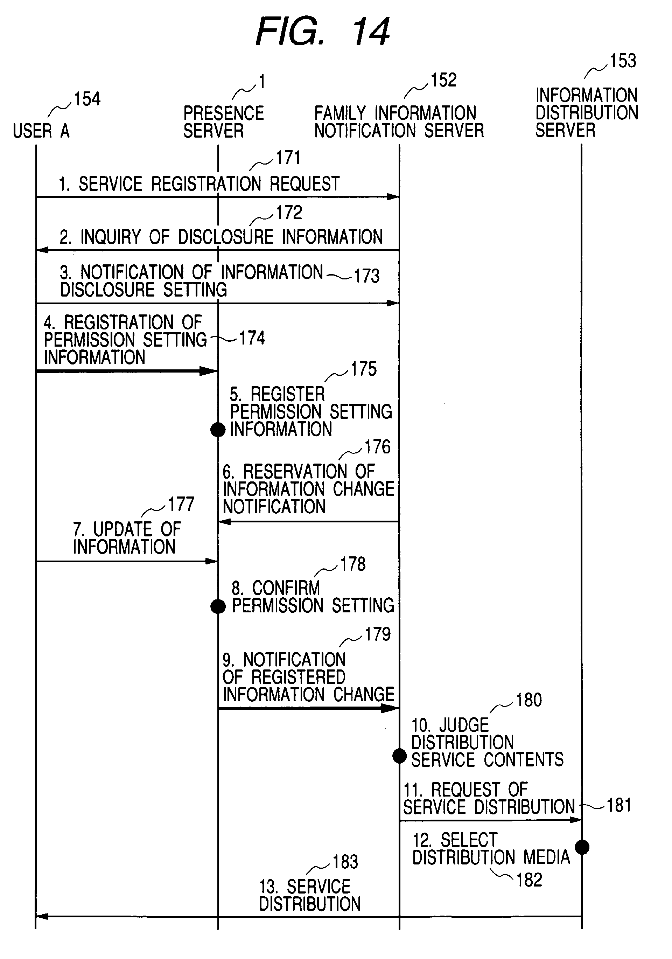

FIG. 14 shows a specific operation sequence of the above service model and a description will be given herein below to the operation. In Step 171, User A denoted by 154 sends a service registration request to the family information notification server 152. Upon receiving the request, the family information notification server 152 inquires User A of disclosable information in Step 172. In response to the inquiry, User A registers the disclosable information of his own to the family information notification server 152 in Step 173. In most cases, the process in Steps 171 to 173 is performed without the intervention of the presence server. At the same time, permission setting information is also registered in the presence server 1 in Step 174. In Step 175, the presence server 1 stores therein the information disclosure settings registered by User A. To receive a notification of a change in information on User A and the content of the changed information, the family information notification server 152 reserves a notification of a change in User A information by the presence server 1 in Step 176. After that, User A registers his information updated in the presence server 1 in Step 177.

Since the presence server 1 having received the reservation of a notification of a change in User A information from the family information notification server 152 and booked it in Step 176, it attempts to notify the family information notification server 152 of the change in the registered information. At this time, the presence server 1 first checks, in Step 178, the permission settings registered A in the family information notification server 152 by User. Then, only the information for which "Permit" of the Read-permission setting has been checked is sent to the family information notification server 152 in Step 179. In this case, there are two notification methods that can be used, of which one sends only the changed information and the other sends all the information possessed by User A, including information that has not been changed.

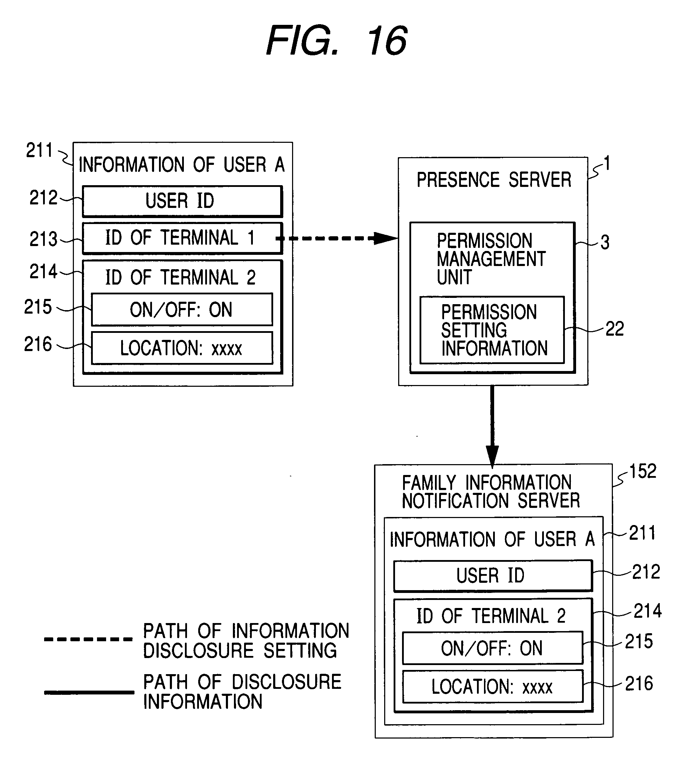

FIG. 16 shows an example of the information possessed by User A denoted by 154 and an example of the information sent to the family information notification server 152 for notification. In FIG. 16, it is assumed that User A has a user ID 212, the ID 213 of a first terminal 1 possessed by User A, the ID 214 of a second terminal 2 possessed by User A, and On/Off 215 and a location 216 which are the attribute information of the terminal 2. However, only the user information items 212, 214, 215, and 216 of User A are opened to the family information notification server 152. This is because User A has registered in the permission setting table 22 that the disclosure-permission setting of the ID 213 of the terminal 1 is "Refuse" with respect to the family information notification server 152 so that the permission management unit 3 of the presence server 1 has not sent the ID 213 of the terminal 1 for notification.

When a method which sends only the changed information is used as an information change notification method, if User A has registered that the disclosure-permission or Read-permission setting for the changed information to the family information notification server 152 is "Refuse", the information change notification in Step 179 is not performed. Information distribution to the family information notification server 152 as shown in FIG. 16 is allowed only when User A registers the information of his own in the presence server 1, and the presence server 1 performs the filtering of the information by the permission setting calculation unit 3.

The family information notification server 152 acquires the changed information on User A in Step 179 and checks the acquired information including the changed information and other information that has not been changed, and judges the necessity of distribution service and the contents of the service in Step 180. Then, the family information notification server 152 determines the distribution of the service and sends a service distribution request to the information distribution server 153 in Step 181. Thereafter, the information distribution server 153 sets distribution media such as a dynamic image, a still image, and a text in accordance with the terminals of the service receiver, a bitrate adapted to the communication bandwidth of User A, and the like in Step 182 and distributes the service to User A in Step 183.

When the family information notification server 152 checks the changed User A information acquired in Step 180 and determines that the distribution service should not be performed, it does not perform the process in Steps 181 to 183 and waits for a next notification of a change in User A information. There are cases where the family information notification server 152 has the function of the distribution server 153. In these cases, the process in Step 181 may not be performed and the process in Steps 182 and 183 may be performed by the family information notification server 152.

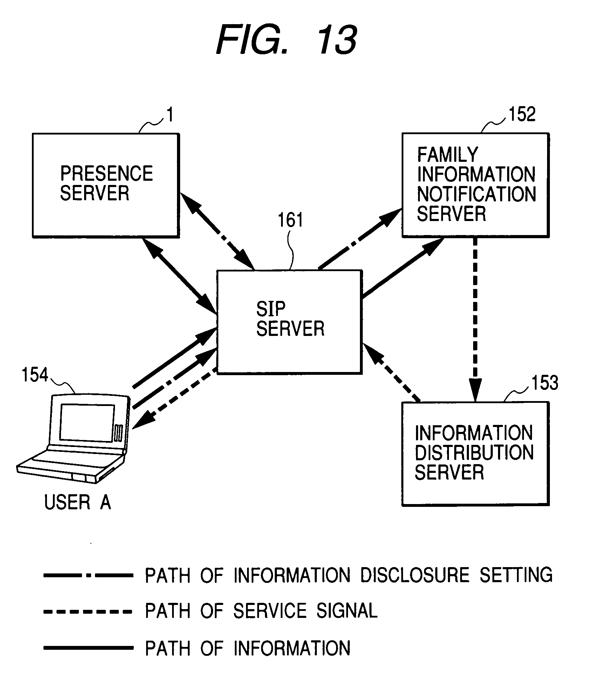

FIG. 13 shows an example for implementing the embodiment of FIG. 12 by using the SIP (Session Initiation Protocol) /SIMPLE (SIP for Instant Messaging and Presence Leveraging Extensions). The SIP/SIMPLE is a protocol for providing functions required to establish a session for real time communication and perform multimedia communication such as the reservation of a notification of a change in presence information, the notification of the presence information change in response to the reservation, and the IM. The SIP server 161 of FIG. 13 has the function of routing a message compliant with the SIP/SIMPLE to transfer the massage to an objective receiver.

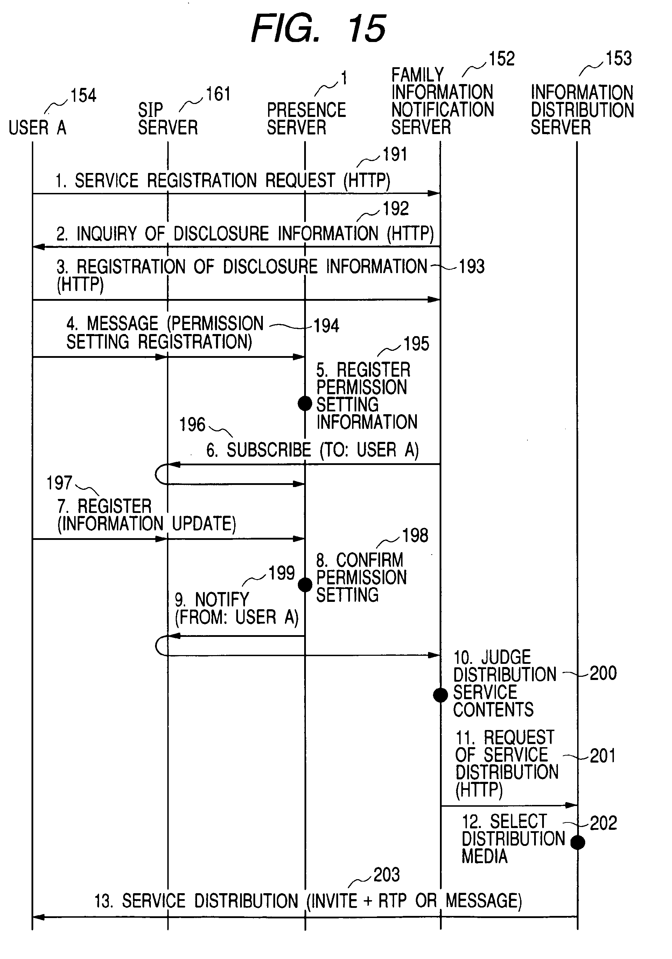

FIG. 15 is an example for implementing the sequence of FIG. 14 by using the SIP/SIMPLE. In FIG. 15, the service is realized by also using the HTTP (Hyper Text Transport Protocol) in addition to the SIP/SIMPLE. In this sequence, the service registration request 171, the inquiry 172 of disclosure information, and the registration 173 of information disclosure setting are implemented in 191, 192, and 193 using the HTTP. These processes are performed without the intervention of the presence server 1. The permission setting 174 is performed by transmitting a SIMPLE MESSAGE Method 194 by applying the SIMPLE via an SIP server 161. The Method is a sequence of letters to be described in the initial portion of an SIP/SIMPLE message. By recognizing the sequence of letters, a purpose for which the SIP/SIMPLE message is transmitted can be determined. Although the MESSAGE Method is originally a Method for transmitting the contents of a statement of the text-based IM, it has been expanded to be able to perform a permission setting request and a permission acquisition request in the apparatus according to the present invention.

The reservation 176 of a notification of a change in User A information is implemented by transmitting a SIMPLE SUBSCRIBE message 196 via the SIP server 161. The registration of information change 177 is implemented by transmitting a REGISTER message 197 via the SIP server 161. Although the REGISTER Method is originally used as a Method for allowing a user to perform on-line registration, the apparatus according to the present invention expands the Method so as to allow the registration of user information.

The notification 179 of a change in registered User A information is implemented by transmitting a NOTIFY message 199 via the SIP server 161. The NOTIFY Method is a Method for thus sending a notification of an information change in response to the reservation of the notification of a user information change booked by using the SUBSCRIBE. As the subsequent service transmission 183, an INVITE message is transmitted by using the SIP in the case where a dynamic image or voice requiring excellent real-time property is distributed, and, after a session is established between User A 154 and the information distribution server 153, the service is transferred by using the RTP protocol. In the case where a still image or a text requiring inferior real-time property is distributed, the service distribution is implemented by a method which directly transmits textual information by using the SIMPLE MESSAGE Method. In either of the cases, an SIP message is transferred via the SIP server 161.

The presence server according to the present embodiment allows proper management of not only the permission information but also any information groups involving logic vertical relations.

### EMBODIMENT 2

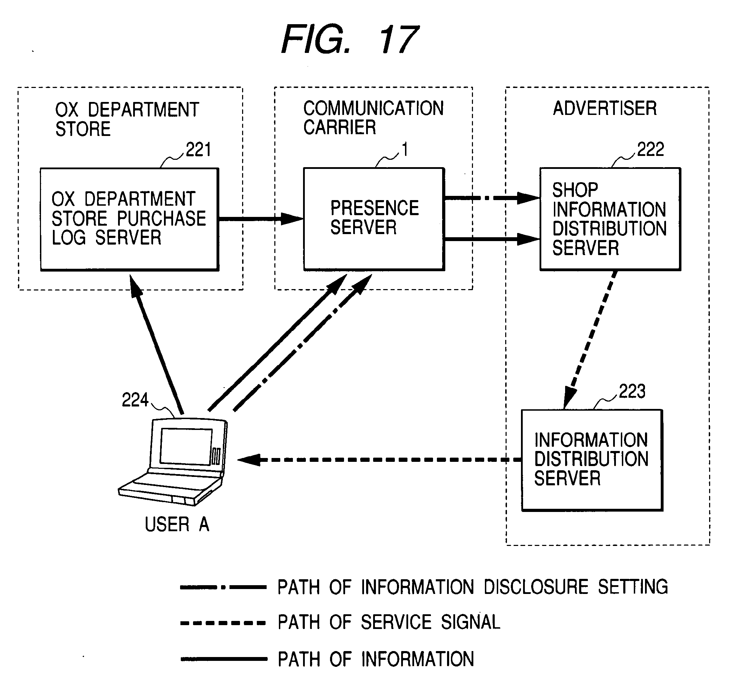

FIG. 17 shows a second embodiment of the business model using the presence server. User A denoted by 224 in FIG. 17 frequently visits the OX department store for daily shopping and the purchase log of User A is stored in an OX department store purchase log server 221. User A has also registered a user ID 272, a hobby 273 and an annual income 274 as user attribute information, a terminal ID 276, On/Off 277 and a location 278 as terminal attribute information in the presence server 1 and receives a service from a shop information distribution server 222. A description will be given to an overall operation. User A has registered the user information of his own and the permission setting to the shop information distribution server 222, in the presence server 1. User A requests the shop information distribution server 222 to provide a service and receives the service via the information distribution server 223.

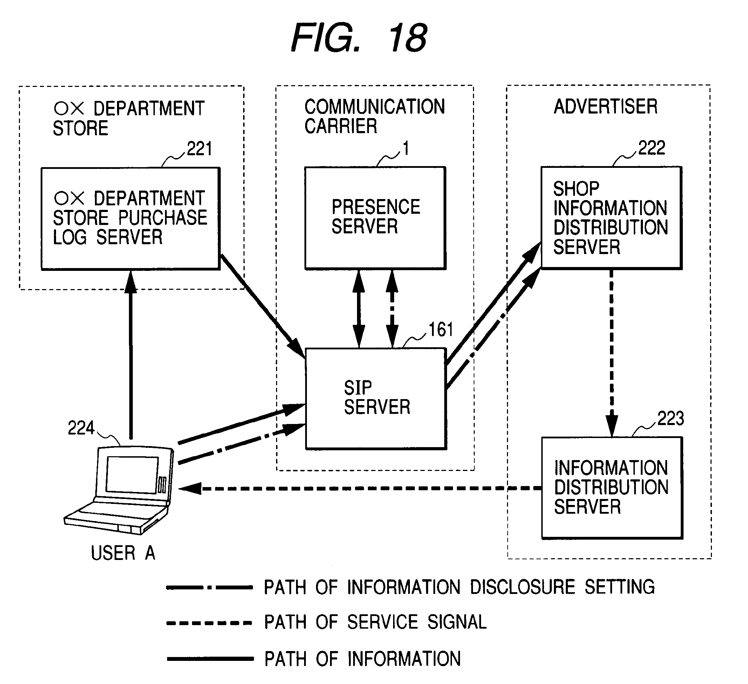

FIG. 10 shows the operation sequence of the second embodiment. A description will be given to a specific operation by using the sequence. First, in Step 231, User A denoted by 224 in FIG. 17 registers log information of his own in the OX department store purchase log server 221. The log information indicates not the information registered by sending a message over a network but the purchase log of User A which is accumulated in the OX department store purchase log server denoted by 221 as a result of shopping by User A at the OX department store. Accordingly, the arrow extending from User A denoted by 224 to the OX department store denoted by 221 in FIGS. 17 and 18 indicates not a network message but the accumulation of information as a result of thus physically performing shopping and the like.

The OX department purchase log server 221 registers the log information in the presence server in Step 232. User A sends a service registration request to the shop information distribution server 222 in Step 233. Upon receiving the request, the shop information distribution server 222 inquires User A of disclosable information in Step 234. In response to the inquiry, User A registers the disclosable information of his own in the shop information distribution server 222 in Step 235. In most cases, these processes in Steps 233 to 235 are performed without the intervention of the presence server. At the same time, permission settings to the shop information distribution server 222 are also registered in the presence server 1 in Step 236.

In Step 237, the presence server 1 stores therein the permission settings registered by User A. To receive a notification of the contents of a change in User A information, the shop information distribution server 222 reserves a notification of a User A information change in Step 238. Then, User A registers the changed information of his own in the presence server 1 in Step 239. Since the presence server 1 has received and booked the reservation of a notification of a User A information change in Step 238, it checks the permission settings to the shop information distribution server 222 fixed by User A in Step 240 and sends only the user information for which the Read-permission setting is "Permit" to notify the shop information distribution server 222 of the User A information change in Step 241. In this case, there are two applicable notification methods, of which one sends only the changed information and the other sends all the information possessed by User A, including information that has not been changed. Of the two notification methods, either one may be used.

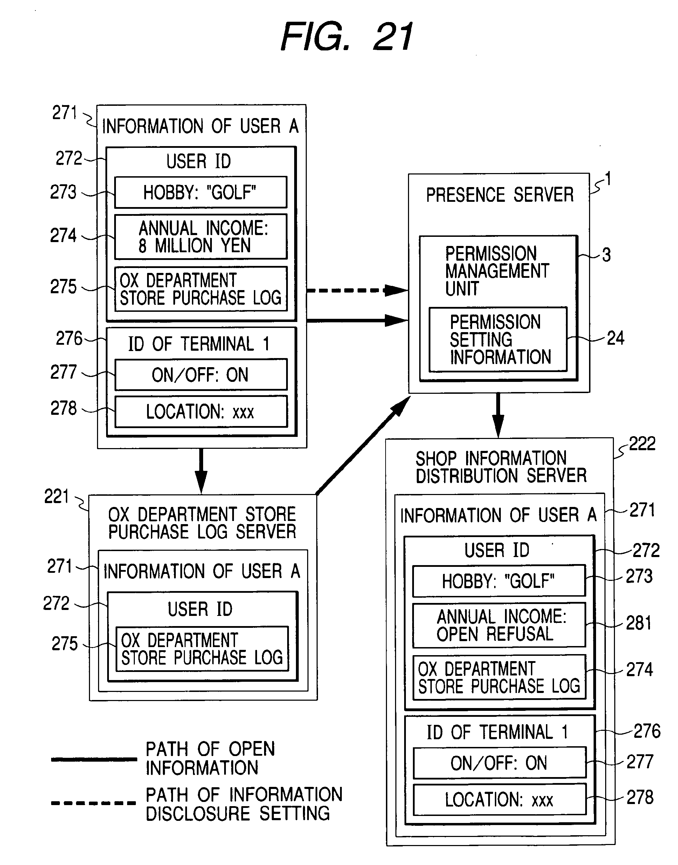

FIG. 21 shows an example of the information registered and changed by User A in the presence server 1 and in the OX department store purchase log server 221 and an example of the information on User A received by the shop information notification server 222. In FIG. 21, User A has a user ID 272, a hobby 273, an annual income 274, and an OX department store purchase log 275 as user attribute information, the ID 276 of the terminal 1 possessed by User A, and On/Off 277 and a location 278 as the attribute information of the terminal 1. The shop information distribution server 222 has received an open refusal 281 for the information on the annual income of User A in this case. This is because User A has registered in the presence server 1, the permission information to the shop information distribution server 222 in which the Read-permission setting for the annual income is "Refuse". In the case where the method which sends only the changed information is adopted as an information change notification method, the information change notification in Step 241 is not performed if the disclosure-permission or Read-permission setting of the changed information to the shop information distribution server 222 is "Refuse".

The shop information distribution server 222 acquires the changed information on User A in Step 241 and checks the acquired information including the changed information and other information that has not been changed, and judges the necessity of distribution service and the contents of the service in Step 242. Then shop information distribution server determines to carry out the distribution service and sends a request to distribute the service to the information distribution server 223 in Step 243. The information distribution server 223 sets distribution media such as a dynamic image, a still image, and a text in accordance with the terminal of the service receiver, a bitrate adapted to the communication bandwidth of User A, and the like in Step 244 and distributes the service including information on, e.g., a store nearest to the current location of User A and a service coupon usable at the store to User A in Step 245. At this time, if the shop information distribution server 222 determines that the distribution service should not. be carried out as a result of checking the changed User A information acquired in Step 241, it waits for a next notification of a change in User A information without performing the processes in Steps 243 to 245. There are cases where the shop information distribution server 222 has the function of the distribution server 223. In these cases, the process in Step 243 may not be performed and the process in Steps 244 and 245 may be performed by the shop information distribution server 222.

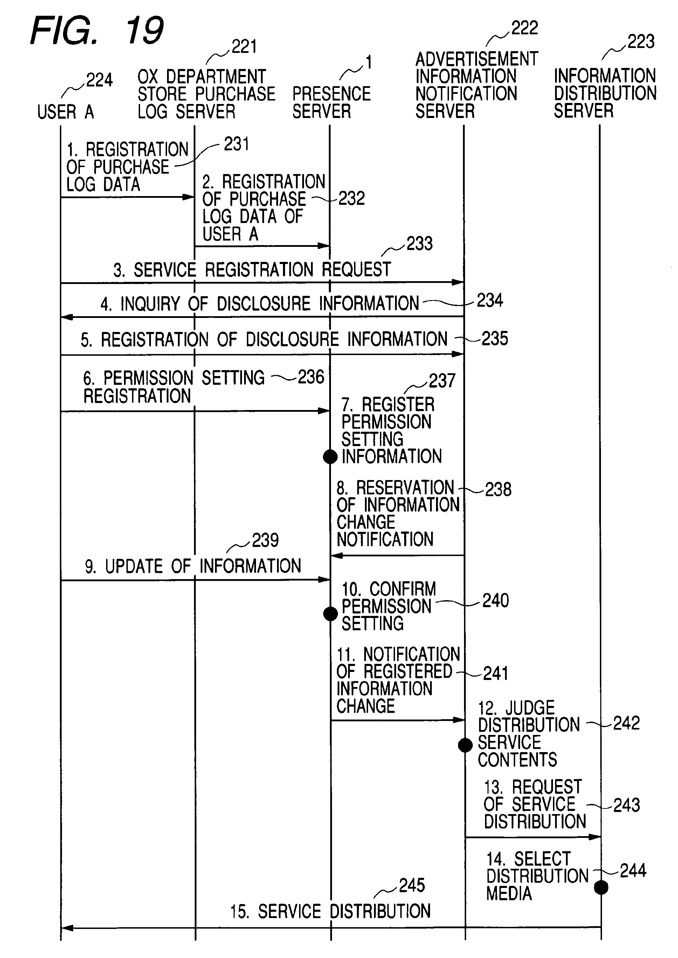

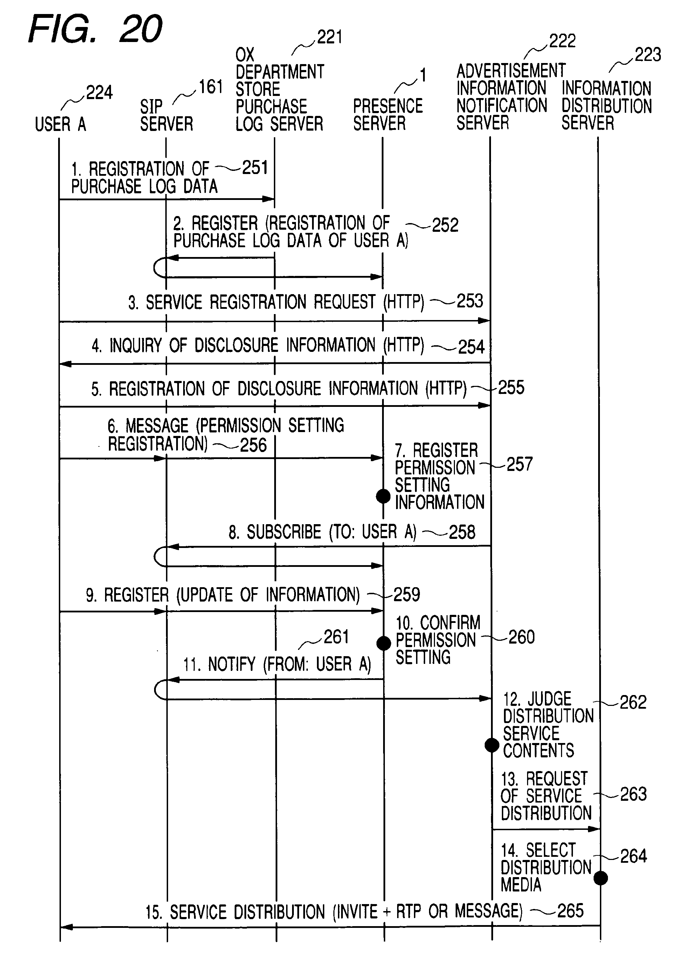

FIG. 18 shows an example for implementing the embodiment of FIG. 17 by using the SIP (Session Initiation Protocol)/SIMPLE (SIP for Instant Messaging and Presence Leveraging Extensions). FIG. 20 shows an example implementing the sequence of FIG. 19 by using the SIP/SIMPLE and the HTTP. A specific operation in FIG. 18 will be described with reference to FIG. 20.

In FIG. 20, the registration 232 of the purchase log of User A of FIG. 19 is implemented by transmitting a SIP REGISTER message 252 via the SIP server 161. The service registration request 233, the inquiry 234 of disclosure information, and the registration 235 of disclosure information are implemented in Steps 253, 254, and 255 by using the HTTP. The permission setting registration 236 is implemented by transmitting a MESSAGE message 256 via the SIP server 161. The reservation 238 of a notification of the User A information change is implemented by transmitting a SUBSCRIBE message 258 via the SIP server. The update 239 of user information is implemented by transmitting a REGISTER message 259 via the SIP server, similarly to 232. The notification 241 of registered information change is implemented by transmitting a NOTIFY message 261 via the SIP server. The distribution 245 as the final service step is implemented by using the RTP after a session is established by transmitting an INVITE message in the case where media data requiring excellent real-time property such as a dynamic image has to be distributed in Step 265. In the case where a still image or a text requiring inferior real-time property is distributed, the service distribution is implemented by transmitting the MESSAGE Method. In either of the methods, an SIP message is transferred via the SIP server 161.

### EMBODIMENT 3

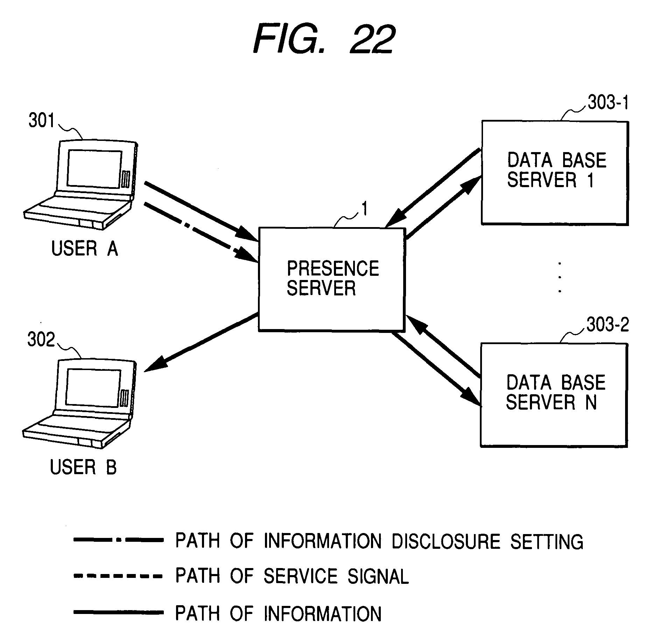

FIG. 22 shows a third embodiment of the business model using the presence server. User A 301 has registered a user ID 312, a hobby 313 and an annual income 314 as user attribute information, the ID 315 of a terminal 1 possessed by User A, and On/Off 316 and a location 317 as the attribute information of the terminal 1 in the presence server 1. On the other hand, User B 302 made a preservation for a notification of a change in User A information and grasps the present state of User A.

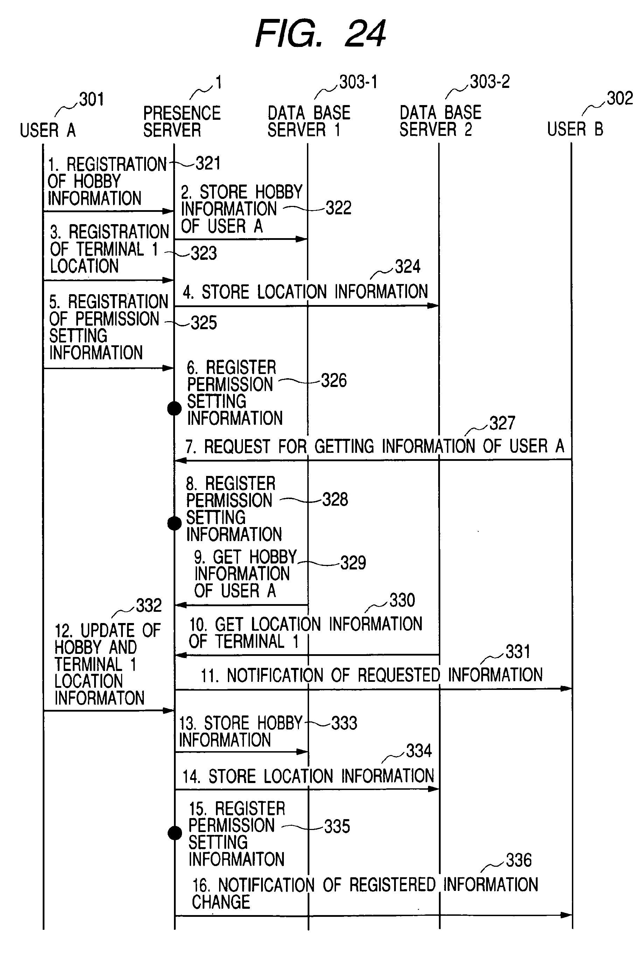

FIG. 24 is an operation sequence chart of the third embodiment. A description will be given to a specific operation in this embodiment with reference to FIG. 24. First, in Step 321, User A registers the hobby 313 in the presence server 1. Since the presence server 1 has been previously arranged so as to store the hobby 313 into a database server A 303-1, the hobby information is registered in the database server A 303-1 in Step 322.

Next, User A registers the location 316 as an attribute of the terminal 1 in the presence server 1 in Step 323. Since the presence server has been previously arranged so as to store the location 316 into a database server B 303-2, the location information is stored in the database server B 303-2 in Step 324. Thereafter, User A registers permission settings to User B in the presence server 1 in Step 325 and the presence server 1 stores the permission settings designated by User A to User B in Step 326. After that, User B sends a reservation of a notification of User A information change to the presence server 1 in Step 327.

Upon receiving the reservation, the presence server 1 checks the permission settings designated by User A to User B in Step 328 and sends only the user information for which the Read-permission setting is "Permit" to User B for notification. That is, the presence server 1 reads out the user information of User A from the database server A 303-1 and the database server B 303-2 in Steps 329 and 330 and sends only the information for which the Read-permission setting to User B is "Permit" in Step 331. At this time, if the disclosure-permission or Read-permission setting for the user ID is "Refuse", there is no user information to be sent for notification so that a no authority message is returned in Step 331, whereby the operation sequence is ended. If User A subsequently changes, e.g., the location information and the hobby in Step 332, the presence server 1 stores the changes in the database server A 303-1 and the database server B 303-2 storing the respective user information items in Steps 333 and 334, and checks the permission information set by User A to User B in Step 335, thereby notifying User B of the user information for which the Read-permission setting is "Permit" in Step 336.

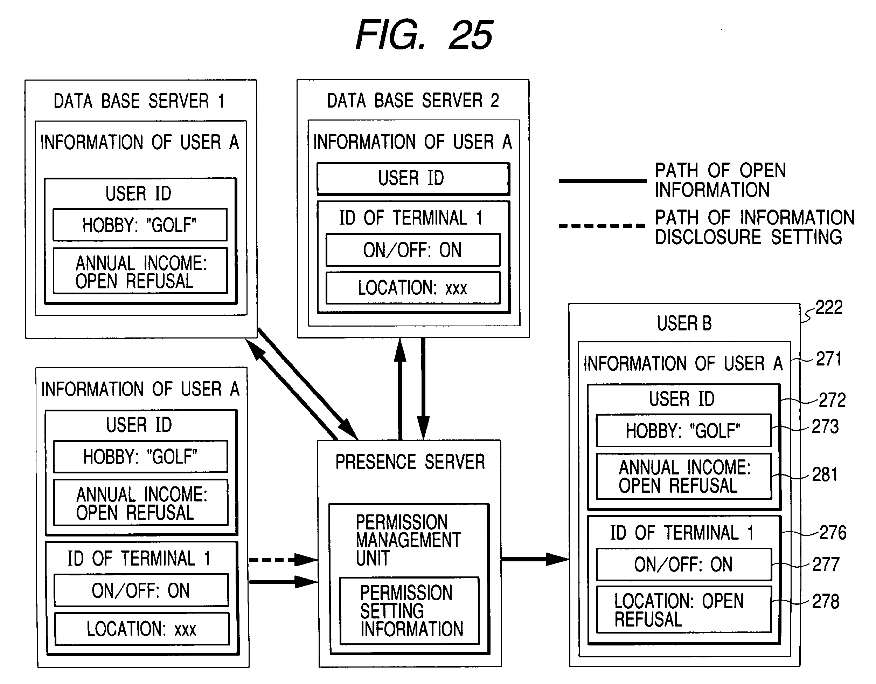

As shown in 302 of FIG. 25, of the information on User A sent to User B for notification, the annual income 351 as a user attribute and the location 352 as the attribute of the terminal 1 has been refused to open. This is because User A has registered the permission settings to User B in the permission setting table 24, in which the Read-permission setting for each of the annual income and the location is "Refuse" and hence the permission control unit 3 of the presence server 1 judged that the information items should not be opened.

FIG. 23 shows an example implementing the embodiment of FIG. 22 by using the SIP/SIMPLE. In FIG. 23, the interface between the presence server 1 and the database server A 303-1 and the interface between the presence server 1 and the database server B 303-2 are the same as FIG. 22, but the interface between User A 301 and the presence server 1 and the interface between User B 302 and the presence server 1 are configured to transmit messages using the SIP/SIMPLE REGISTER, SUBSCRIBE, NOTIFY, and MESSAGE Methods via the SIP server 161.

### EMBODIMENT 4

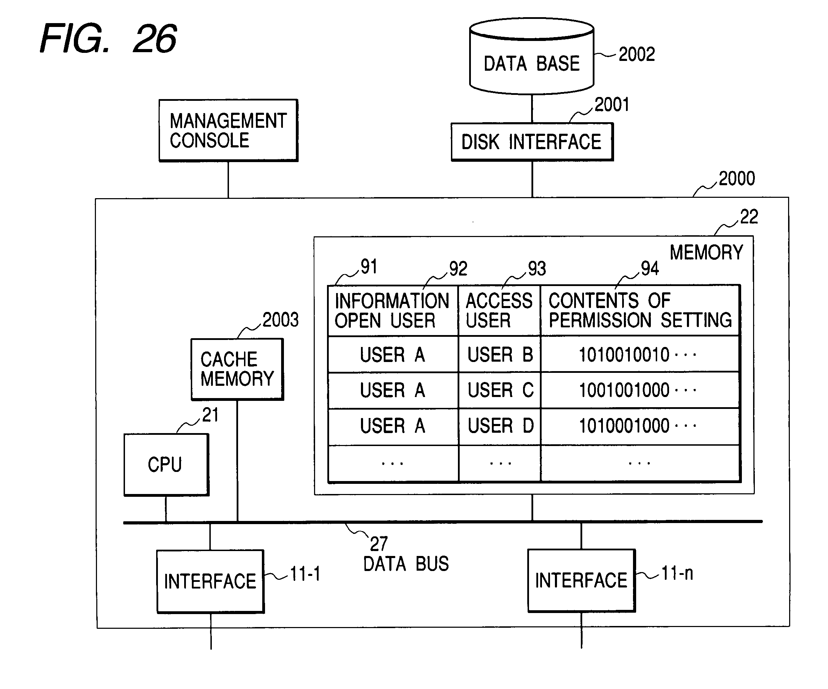

In this embodiment, a description will be given to another example of the structure of the presence server. FIG. 26 is a schematic diagram of a presence server having a structure different from that of FIG. 2. The presence server according to the present embodiment uses a single entry table containing each of the information open user names, the information access user names, and the permission setting values. That is, the entry table same as that shown in FIG. 9 is used. The entry table in this mode has the advantage that reverse retrieval which retrieves a user name from the contents of permission settings can easily be performed over the separate entry tables shown in FIGS. 6 and 7, since the information open user name field, the information access user name field, and the permission setting value filed are contained in the single entry table.

Because of the large data size of the entry table, however, it is impossible to store all the data sets in the memory as in the embodiment shown in FIG. 2. The data sets are stored usually in an external storage 2002 and the permission setting process is performed by storing only the necessary portion of the entry table in a memory space. In FIG. 26, 2001 denotes a disk interface for connecting between the external storage 2002 and the main unit of the presence server. Since a reference table for interpreting the contents of permission settings (which is the same as the table shown in FIG. 8) is also necessary in the present embodiment, a cache memory 2003 is provided for storing the reference table.

### EMBODIMENT 5

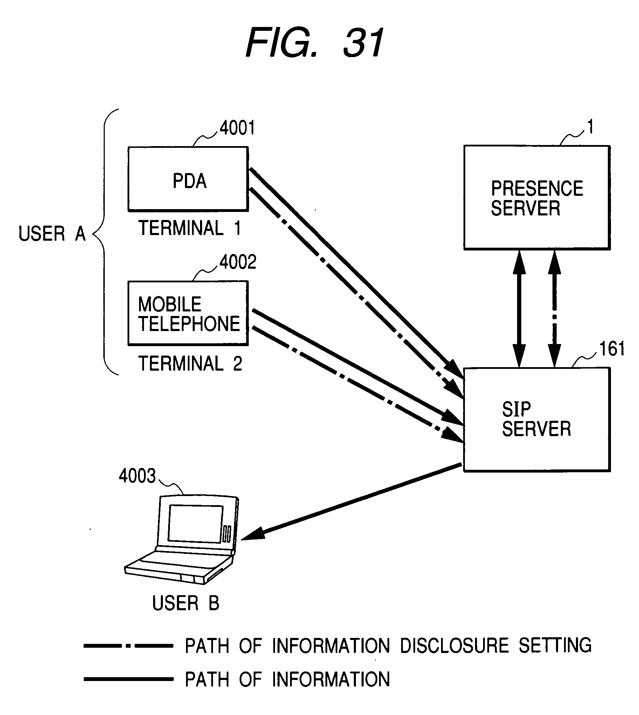

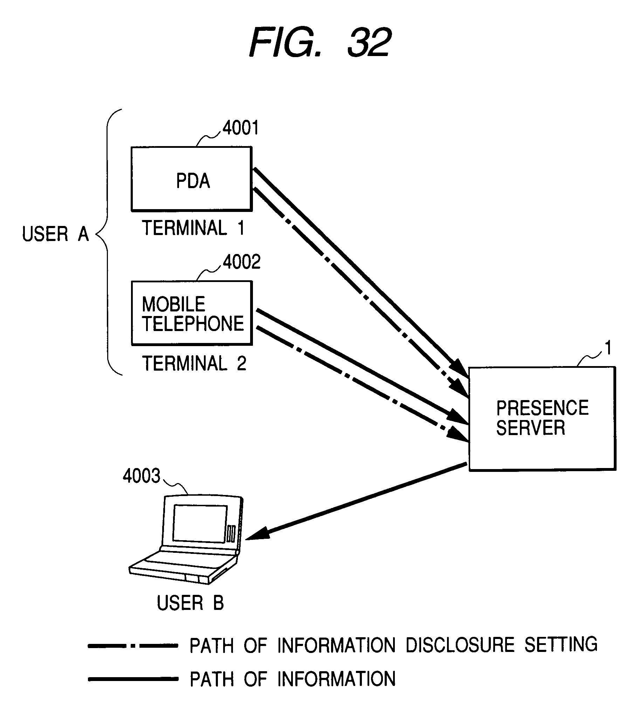

In this embodiment, the procedure for changing permissions in an actual use situation and advantages achieved thereby will be described. In FIG. 31, it is assumed that User A and User B are office colleagues. It is also assumed that User A has a PDA terminal 1 denoted by 4001 and a terminal 2 denoted by 4002 and has registered presence information and permission information in the presence server 1 via the SIP server 161. Although the model shown in FIG. 31 performs access to the presence server via the SIP server, a mode which performs direct communication with the presence server 1 without the intervention of the SIP server 161 may also be considered, as shown in FIG. 32. The presence server 1 is provided with an SIP session control function in the former case. In the latter case, the presence server 1 communicates with User A and User B by using a protocol such as the HTTP, Instant Messaging, or the like instead of the SIP.

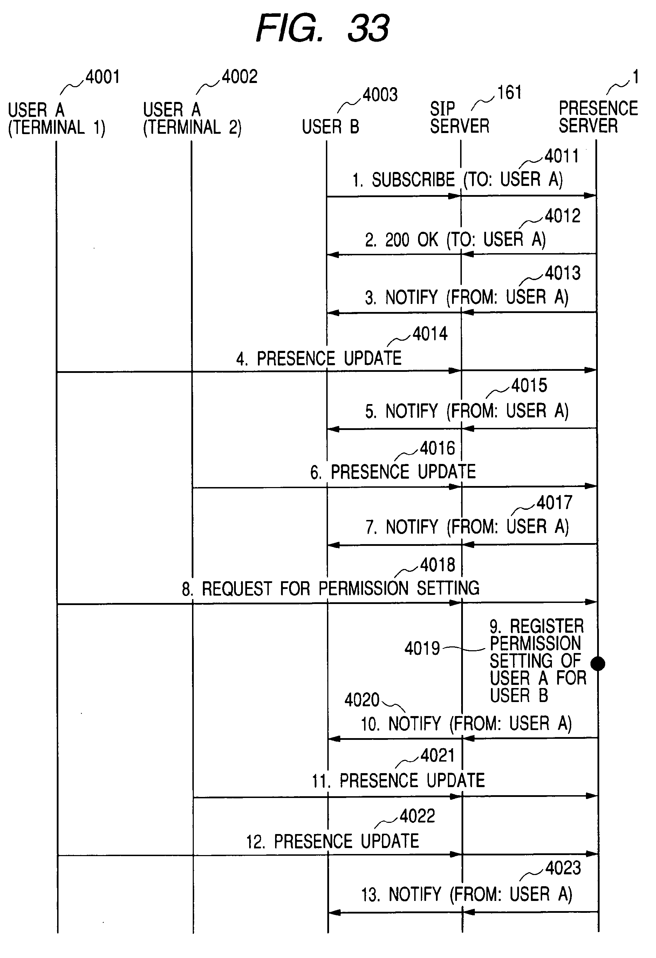

A description will be given to messages communicated in a network diagram shown in FIG. 31 with reference to a sequence chart shown in FIG. 33. The description will be given on the assumption that communication is performed over this network by using an SIP message indicated by Request For Comment (RFC) 3261 standardized by the IETF. As stated above, however, it is also possible to implement this sequence by using a protocol for the HTTP, Instant Messaging, or the like instead of the SIP.

First, in Step 4011, User B sends a SUBSCRIBE message to the presence server 1 by using the terminal 4003 of his own to know the state of User A. The SUBSCRIBE is termed as a METHOD and represents the type of a message defined in the SIP. A method for using the SUBSCRIBE is defined in the IETF Request For Comment (RFC) 3265. The presence server 1 having received the SUBSCRIBE message then sends to User B a 200 OK response indicating that the SUBSCRIBE has succeeded in Step 4012 and subsequently sends a NOTIFY message to User B in Step 4013 to notify User B of the presence information, i.e., object information of User A. The NOTIFY message is also a Method defined in the RFC3265, similarly to the SUBSCRIBE, for describing object information therein. With the NOTIFY method, User B is notified of the object information of each of the terminal 1 (4001) and the terminal 2 (4002) possessed by User A.

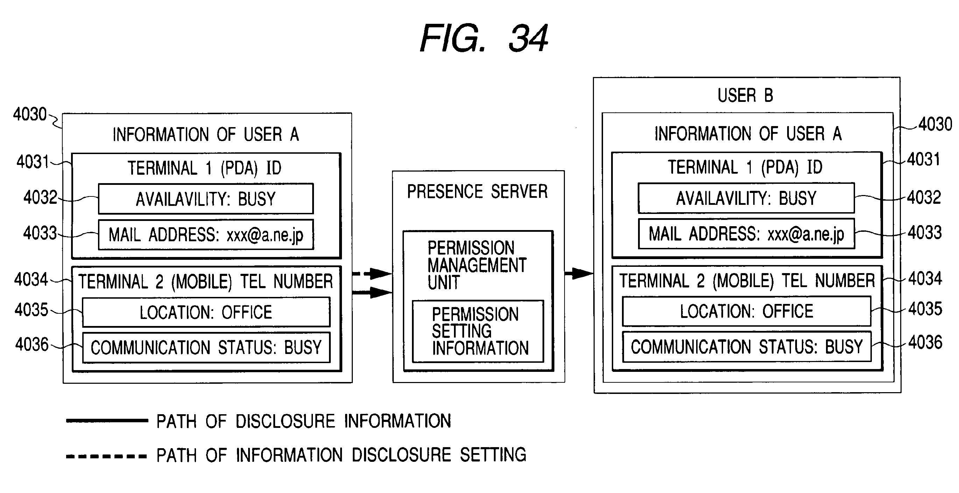

FIG. 34 shows the object information opened by User A to User B based on the permission settings in contrast with all the object information items possessed by User A. The items denoted by 4030 to 4036 are the object information items possessed by User A. In an actual situation, the object information items possessed by User A have been registered in the presence server. The permission setting information is held in the permission management unit in the presence server. In the case of using the presence server having the structure shown in FIG. 2, on the other hand, the permission setting information is stored in the permission setting table in the memory.

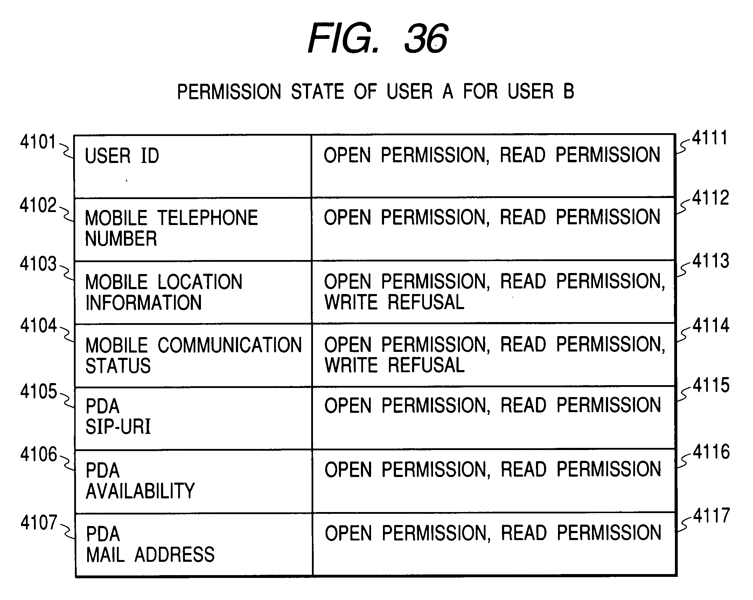

FIG. 36 shows the permissions set by User A to User B at the time of the arrival of the NOTIFY message at User B in Step 4013. As shown in FIG. 36, User A gives open-permission to all the object information items possessed by User A for User B. Accordingly, all the object information items 4030 to 4036 shown in FIG. 34 are sent as they are to User B for notification.

A description will be given next to the latter half portion of the sequence chart of FIG. 33. When User A changes the object information of the terminal 1 (4001) in Step 4014, the presence server 1 notifies User B of the change in the object information of User A by using a NOTIFY message in Step 4015. This is because the SUBSCRIBE message sent in Step 4011 has a predetermined validity period and, each time the obj ect information of User A is changed, the contents of the change is sent by the presence server 1 to User B for notification during the validity period. Steps 4016 and 4017 shows a sequence when the object information of the terminal 2 (4002) is changed, the procedure of which is the same as that of Steps 4014 and 4015.

It is assumed that User A is on his way home after work and User A and User B are not intimate friends, though they are office colleagues. Duringprivate off-work hours, User A limits the information item accessible by User B to his e-mail address with the intention that User B should use the e-mail for a business contact with User A. User A does not wish to open the availability information, the location information, and the communication mode information to User B. Further, User A does not want a mobile phone call from User B. On leaving the office, for these reasons , User A changes the permission settings to User B. Specifically, User A sends a message to change permission settings from his terminal to the presence server 1 (Step 4018) and changes the permission settings stored in the presence server 1. The contents of the message is a request to switch the disclosure-permission setting for the mobile telephone to "Refuse" and to switch the Read-permission setting of the availability of the PDA terminal to "Refuse". The presence server 1 having received the permission setting requests makes matching the contents of the permission settings in Step 4019 and performs registration.

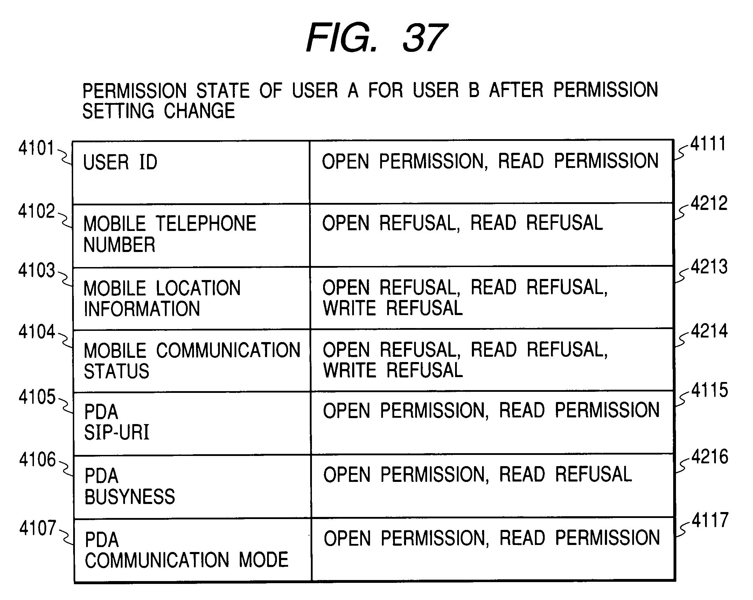

FIG. 37 shows the contents of permission settings changed as a result of the registration of the permission settings in Step 4019. Since the requests from User A includes the switching of the disclosure-permission setting of the mobile telephone to "Refuse", the disclosure-permission setting of the mobile telephone number is changed to "Refuse" and the lower layer Read-permission setting is also changed automatically to "Refuse" as the result of the matching by the presence server 1.

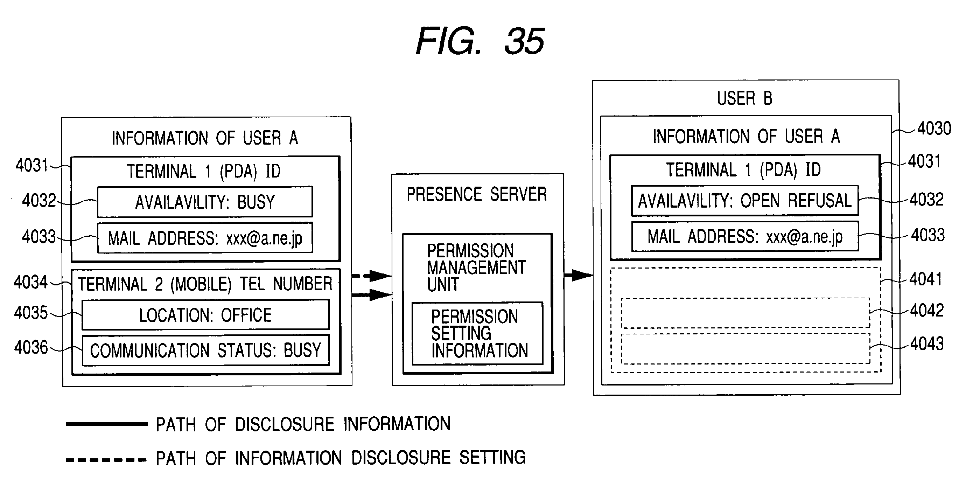

FIG. 35 shows the object information of User A opened to User B based on the changed permission settings. Of the information items of the terminal 1, those opened to User B are only the ID 4031 and mail address 4033 of the terminal 1 and the opening of the availability 4032 is refused. As for the object information items of the terminal 2, none of them is disclosed.

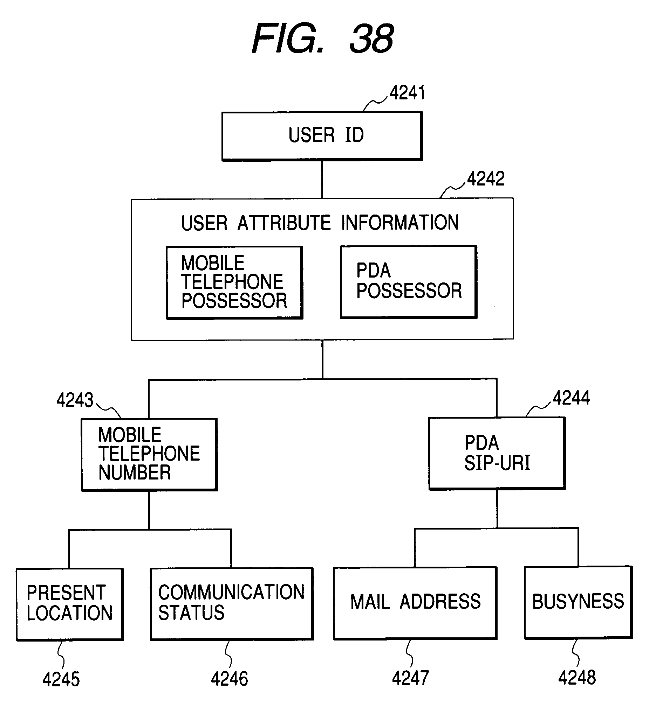

FIG. 38 is a view showing the vertical relations among the object information items used in the service illustrated in FIG. 31. Based on the vertical relations shown in FIG. 38, the location information and communication mode information of the mobile telephone are also matched by the presence server 1 and the disclosure-permission and Read-permission settings therefor are automatically switched to "Refuse". Since it can be seen from FIG. 38 that the availability of the PDA is the lowest layer object, the permission settings therefor are not changed automatically, though the consistency thereof with the other permission settings is checked.

Immediately after the changing of the permission settings by User A, the presence server 1 sends the object information items granted by the permission settings, i.e., only the mail address information to the terminal 4003 of User B by using a NOTIFY message. Thereafter, even though User A changes the presence information, if the permission therefor has not been given by User A to User B, the presence server 1 no more sends the notification of the state change to User B. For example, even if User A changes the presence information of the mobile telephone in Step 4201, the notification of the change is not sent to User B. However, if the object information opened to User B is changed as in Step 4022, the object information is sent by using a NOTIFY message as in Step 4023.

### EMBODIMENT 6

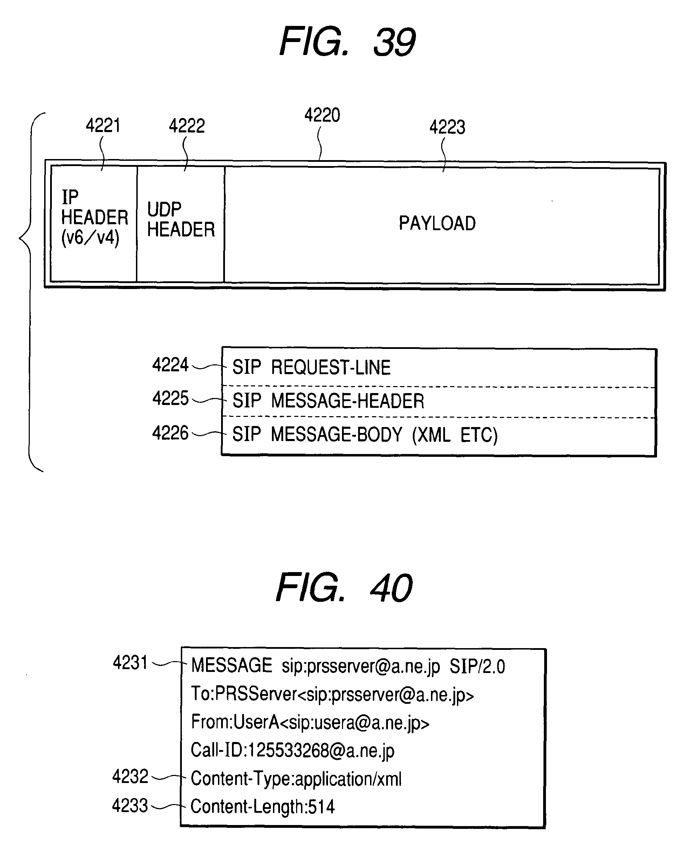

FIGS. 39 to 41 are views illustrating how a permission setting request is actually transmitted in Step 4018 of FIG. 33. An actual message for requesting permission setting is composed of a packet using the SIP protocol and the IP as shown in 4220 of FIG. 39. 422 denotes an IP header of the IP packet, in which an IPv4 address or an IPv6 address is described depending on whether the IP protocol is IPv4 or IPv6. In the drawings, 4222 denotes a header indicating description of a transport layer. A transmitter port number and a destination port number are described in the transport layer header, whether either of the TCP/UDP is used. The portion in which SIP protocol data is actually described is the payload denoted by 4223. The detailed description of payload corresponds to 4224 to 4226.

A SIP message is composed of an SIP request line 4224 describing the type of the message, a SIP header 4225 describing the settings for the message, and an SIP message body 4226 describing the actual data. As shown in FIG. 40, for example, the present embodiment sends a setting request by using the MESSAGE Method which is a Method for Instant Messaging defined in the IETF Request For Comment (RFC) 3428. Likewise, the MESSAGE Method is also used on the acquisition of the permission settings.

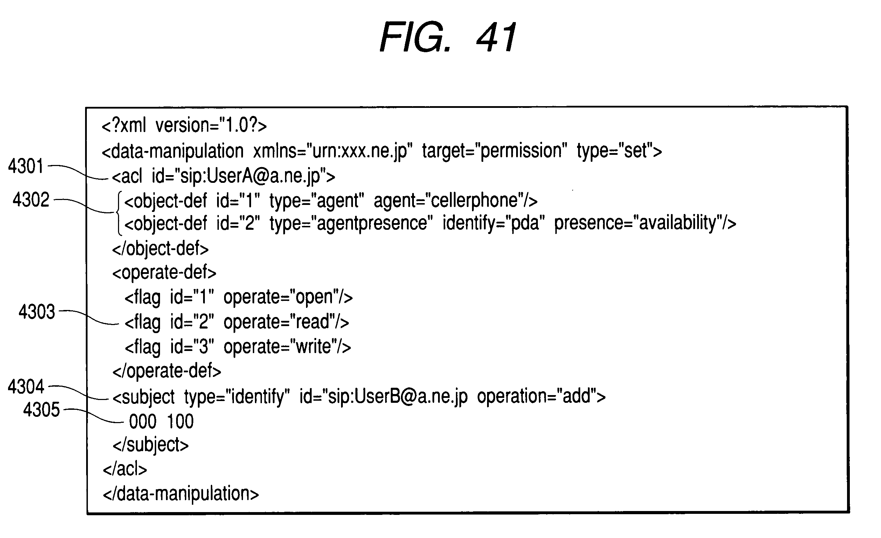

In an SIP message using the MESSAGE Method, as shown in FIG. 41, a request to the presence server 1 is described by using the eXchange Markup Language (XML). Permission setting/acquisition requests may also be described in the SIP message body portion by using a description format other than the XML or a different XML schemer (grammar). At this time, the description format of the SIP message body is described in a Content-Type header shown in 4232 of FIG. 40. In a Content-Length header shown in 4233, the capacity of the SIP message body is described in bytes. The usage of the SIP header is described in the IETF Request For Comment (RFC) 3261.

A description will be given to the XML schemer of the SIP message body portion shown in FIG. 41. The XML of FIG. 41 is mainly composed of an "acl" element shown in 4301, an "object-def" element shown in 4302, a "flag" element shown in 4303, and a "subject" element shown in 4304. The "acl" element describes the SIP-URI of the user who carries out permission setting. The "object-def" element describes the types of the permissions to be set. The "flag" element describes the contents of the operations of the permissions to be set. The "subject" element describes the SIP-URI of a user to whom the permissions are given and the contents of the settings.

The contents of the settings are actually described in a format as shown in 4305. In this case, the description is a sequence of bits. The sequence of bits describes the contents of the settings in the order of objects defined by the "object-def" element. To each of the objects, the bits corresponding to the operation described by the "flag" element are given and show the setting of "0" (Refuse) or "1" (Permit) for each of the operations.

In the setting of FIG. 41, the bit sequence is "000 100". The first 3-bit "000" indicates that the settings of disclosure = Refuse, read = Refuse, and write = Refuse are designated for the mobile telephone as the first object. It can also be seen from the second 3-bit "100" that, for the availability of the PDA as the second object, the settings of disclosure = Permit, read = Refuse, and write = Refuse are designated. Although the present embodiment has defined a write operation by using the "flag" element, it is sufficient for the "flag" element to describe only the operation for which permission setting is intended. For example, if only the permission setting for a read operation is intended, it is possible to limit the "flag" element to the read operation.

By using the reception of such a message as a trigger, the presence server 1 according to the present invention can examine consistency between the permission settings, complement the contents of the settings, and register the contents of the settings.

## Claims

1. A server comprising:
first means for categorizing permission setting values indicating whether object information items of various attribute of a registered user are disclosable to other persons or not depending on a level of the disclosability; and
second means for managing the permission setting values hierarchically.

2. A server according to claim 1, wherein
said first means categorizes said permission setting values into three respective levels for determining whether an open operation, a read operation, and a write operation are executable with respect to any of the object information items.

3. A server according to claim 1 or 2, wherein
said second means manages said permission values so that executability of open operation is set as a permission level higher than said executability of read operation, and executability of read operation is set as a permission level higher than said executability of write operation, and
said second means includes detection means for detecting contradiction in a specified one of the permission setting values based on vertical relations among the permission levels.

4. A server according to at least one of claims 1 to 3, wherein,
said detection means checks, when there is a request from the user to change the setting value for either of the permission levels other than said executability of open operation for any of the object information items, consistency of the permission setting value for each level higher than the level for which the change request has been made with the setting value for which the charge request has been made.

5. A server according to at least one of claims 1 to 4, wherein,
said detection means corrects, when there is contradiction in said consistency, the permission setting value for each level higher than the level for which the request to change the setting value has been made.

6. A server according to at least one of claims 1 to 5, wherein,
said second means manages said object information items by imparting vertical relations thereto in accordance with types of the object information items and systematically categorizing the object information items.

7. A server according to at least one of claims 1 to 6, wherein,
said detection means checks, when there is a request from the user to change the permission setting value for an arbitrary one of the levels for any of the object information items, consistency of the permission setting value belonging to each of the object information items higher in rank than the object information item to which the setting value that has received the change request belongs with the setting value that has received the change request.

8. A server according to at least one of claims 1 to 7, wherein,
said detection means corrects, when there is contradiction in said consistency, the permission setting value belonging to any of the object information items higher in rank than the object information item to which the setting value that has received said change request belongs.

9. A server according to at least one of claims 1 to 8, wherein,
said second means manages said attribute information items by imparting vertical relations thereto in accordance with types of the attribute information items and systematically categorizing the attribute information items.

10. A server comprising:
an interface (11-1; 11-n) for receiving transmitted information;
storage means (22); and
means for reading information stored in the storage means (22) therefrom, wherein
said storage means (22) has an entry table for storing object information items corresponding to various attribute of a registered user and permission setting values indicating whether said attribute information items are disclosable to other persons or not, said permission setting values being categorized in accordance with a level of the disclosability thereof.

11. A server according to claim 10, wherein
said permission setting values are categorized into a plurality of levels having vertical relations thereamong and
said entry table stores the setting value given to any of the plurality of levels.

12. A server according to claim 10 or 11, wherein
said permission setting values are categorized into three respective levels for determining whether an open operation, a read operation, and a write operation are executable with respect to any of the object information items, and
said entry table stores the setting value given to any of said three levels.

13. A server according to at least one of claims 10 to 12, further comprising:
means for extracting a request to change any of the permission setting values from received information; and
judging means for judging whether or not the permission setting value for which said change request has been made is contradictory to any of the permission setting values higher in rank than the setting value by referencing said entry table.

14. A server according to at least one of claims 10 to 13, further having:
means for correcting, when there is contradiction between the setting value for which said change request has been made and any of the permission setting values higher in rank than the setting value, the higher rank permission setting value.

15. A server according to at least one of claims 10 to 14, further comprising:
an external storage device storing therein copy data of said entry table.

16. A method for controlling a server, comprising the step of:
categorizing permission setting values indicating whether object information items corresponding to various attribute of a registered user are disclosable to other persons or not into a plurality of levels; and
hierarchically managing said object information items by imparting thereto vertical relations depending on a level of the disclosability.

17. A method according to claim 16, further comprising the steps of:
receiving, from said registered user, a request to change the permission setting value for a specified one of the object information items;
determining a level of the permission setting value for which the change request has been made;
judging whether there is contradiction between the permission setting value belonging to any level higher than the determined level and the permission setting value for which said change request has been made; and
correcting, when there is contradiction, the permission setting value belonging to the level higher than said determined level.

18. A method according to claim 16 or 17, wherein
said object information items are managed by imparting vertical relations thereto in accordance with types of the object information items and categorizing the object information items.

19. A method according to at least one of claims 16 to 18, further comprising the steps of:
receiving, from said registered user, a request to change the permission setting value for a specified one of the object information items;
determining a level to which the object information item belongs;
judging whether or not there is contradiction between the permission setting value for the object information item belonging to any level higher than the level of the object information item to which the permission setting value that has received the change request belongs and the permission setting value that has received the change request; and
notifying, when there is contradiction, the user that the setting change request has been refused.

20. A service providing system comprising:
a presence server (1) for categorizing permission setting values indicating whether object information items of various attribute of a registered user are disclosable to other persons or not depending on a level of the permission and hierarchically managing the permission setting values;
a service providing server for providing a service to a user; and
a terminal (154) with which the user receives the service provided by said service providing server,
wherein
said service providing server issues, to said presence server (1), an access request for a specified one of the object information items of the user to which the service is to be provided,
said presence server (1) transmits to said service providing server, a portion of the object information item for which the access request has been issued which can be given within a range of the permission setting values, and
the service providing server provides the service to the user based on the received portion of the object information item.

21. A method for providing a service using a system having at least a presence server (1) which categorizes permission setting values indicating whether object information items of various attribute of a registered user are disclosable to other persons or not depending on a level of the permission and hierarchically manages the permission setting values; a service providing server which provides service to a user; and a terminal which allows the user to receive the provided service, the method comprising the steps of:
issuing from said service providing server to said presence server (1), an access request for a specified one of the object information items of the user to which the service is to be provided,
transmitting from said presence server (1) to said service providing server, a portion of the object information item for which the access request has been issued which can be given within a range of the permission setting values, and
providing service to the user by the service
providing server based on the received portion of the object information item.
